# EUROPÄISCHE PATENTSCHRIFT

(11) **EP 3 959 029 B1**
(45) Veröffentlichungstag und Bekanntmachung des Hinweises auf die Patenterteilung: **06.07.2022**
(21) Anmeldenummer: 20721540.1
(22) Anmeldetag: 23.04.2020
(51) Int. Cl.: B23K 9/133, B23K 9/29

(54) **SCHWEISSVORRICHTUNG UND VERFAHREN ZUM BETRIEB EINER SCHWEISSVORRICHTUNG**
WELDING DEVICE AND METHOD FOR OPERATING A WELDING DEVICE
DISPOSITIF DE SOUDAGE ET PROCÉDÉ POUR FAIRE FONCTIONNER UN DISPOSITIF DE SOUDAGE

(30) Priorität: 24.04.2019 DE 102019002938; 24.04.2019 DE 102019002939
(43) Veröffentlichungstag der Anmeldung: 02.03.2022
(73) Patentinhaber: Alexander Binzel Schweisstechnik GmbH & Co. KG, 35418 Buseck (DE)
(72) Erfinder: MATHIS, Maximilian, 82194 Gröbenzell (DE)
(74) Vertreter: Weckenbrock, Matthias
(86) Internationale Anmeldenummer: PCT/EP2020/061371
(87) Internationale Veröffentlichungsnummer: WO 2020/216859

(56) Entgegenhaltungen:
- WO-A1-02/090034
- WO-A1-2005/042201
- WO-A1-2005/056228

## Beschreibung

### Schweißvorrichtung mit Schweißdrahtwechselmechanismus, insbesondere für Mehrachsroboterarme

Die vorliegende Erfindung betrifft gemäß dem Oberbegriff des Anspruchs 1 eine Schweißvorrichtung, siehe z.B. WO2005056228A1, gemäß Anspruch 12 einen Mehrachsroboterarm und gemäß Anspruch 13 ein Verfahren zu Betrieb einer Schweißvorrichtung und gemäß Anspruch 16 einen **Orbitalschweißroboter.**

Die Druckschrift WO2005056228 A1 offenbart eine Schweissanlage mit einem Schweissgerät mit einer an diesem über ein Schlauchpaket anschliessbaren Schweissbrennereinheit, wobei im Schweissgerät zumindest eine Steuervorrichtung, eine Schweissstromquelle und gegebenenfalls eine Drahtfördereinheit angeordnet ist, wobei die Schweissbrennereinheit aus zumindest zwei getrennten Schweissbrennern zur Ausführung zumindest zweier eigenständiger getrennter Schweissprozesse ausgebildet ist. Die aus der WO2005056228 A1 bekannte Schweissvorrichtung ist dadurch kennzeichnet, dass der erste Schweissbrenner zur Ausführung eines Schweissprozesses und zumindest ein zweiter Schweissbrenner zur Ausführung eines Kalt-Metall-Transfer-Schweissprozesses mit einer Vor-Rückbewegung eines Schweissdrahtes ausgebildet ist, und dass eine Einrichtung zur Synchronisierung der über die zumindest beiden Schweissbrenner ausgeführten Schweissprozesse vorgesehen ist.

Die Druckschrift WO02090034A1 offenbart einen Zentralanschluss mit einem Gehäuse bzw. ein zentrales Führungsgehäuse mit mindestens einem an dem Gehäuse und dem Führungsgehäuse fixierten Anschlusselement für ein Schlauchpaket mit unterschiedlichen Leitungen, wie beispielsweise Gas-Versorgungsleitungen, Kühlleitungen, Stromversorgungsleitungen, Steuerleitungen, die bevorzugt in einem Schutzmantel zusammengefasst sind. Der aus der WO02090034A1 bekannte Zentralanschluss ist dadurch gekennzeichnet, dass am Gehäuse des Zentralanschlusses bzw. am zentralen Führungsgehäuse ein vom Anschlusselement räumlich distanziertes weiteres Anschlusselement, insbesondere ein Schnellverschluss, angeordnet ist, der zum Anschluss eines Führungsschlauches für einen Schweissdraht ausgebildet ist.

Die Druckschrift WO2005042201A1 offenbart ein Verfahren zum Fördern von Schweissdraht von einem Drahtvorrat mittels einem Hilfsantrieb durch ein Schlauchpaket zu einem bevorzugt im Schweissbrenner angeordneten Hauptantrieb, wobei der Schweissdraht vom Hilfsantrieb in Richtung des Schweissbrenners mit konstanter Förderkraft gefördert wird. Das Verfahren der WO2005042201A1 ist dadurch gekennzeichnet, dass ausschliesslich der Hauptantrieb für eine reversierende Bewegung des Schweissdrahtes ausgebildet ist, und dass der Schweissdraht vom Hilfsantrieb mit vordefinierter Förderkraft und unterschiedlicher Födergeschwindigkeit gefördert wird, wobei die Förderkraft derart definiert wird, dass durch die Reibungsverluste des Schweissdrahtes im Schlauchpaket der Schweissdraht im Wesentlichen kraftfrei dem Hauptantrieb bereitgestellt wird.

In vielen Anwendungsfällen, insbesondere in der Automobilindustrie, müssen Bauteile mit unterschiedlichen Schweißnähten versehen werden. Hierzu werden aufwendige Maschinenparks bereitgehalten, derartige Maschinenparks bedingen hohe Wartungs- und Anschaffungskosten, ferner belegen sie viel Fläche.

Es ist daher die Aufgabe der vorliegenden Erfindung eine verbesserte oder alternative Schweißvorrichtung und ein verbessertes oder alternatives Schweißverfahren bereitzustellen.

Die Erfindung kann z.B. durch eine Schweißvorrichtung gemäß Anspruch 1 gelöst werden. Diese Schweißvorrichtung weist dabei bevorzugt auf:
Mindestens oder genau eine Stromkontaktdüse, wobei die Stromkontaktdüse eine längliche Führungseinrichtung zum Führen eines Schweißdrahtes aufweist.

Mindestens oder genau einen Düsenstock, wobei die Stromkontaktdüse an oder in dem Düsenstock angeordnet ist.

Die Schweißvorrichtung kann mindestens oder genau eine Ausrichteinrichtung aufweisen. Der Düsenstock kann dabei zumindest mittelbar mit der Ausrichteinrichtung verbunden sein oder verbindbar sein. Der Schweißdraht kann bevorzugt durch die Ausrichteinrichtung hindurch in den Düsenstock, insbesondere die Stromkontaktdüse, leitbar sein. Die Ausrichteinrichtung weist bevorzugt einen Aufnahmeanteil und einen Abgabeanteil auf, wobei über den Aufnahmeanteil Strom und/oder Arbeits-Gas in die Ausrichteinrichtung einleitbar ist/sind und wobei der eingeleitete Strom oder das eingeleitete Arbeits-Gas in den Düsenstock einleitbar sind und/oder wobei der eingeleitete Strom oder das eingeleitete Arbeits-Gas über den Abgabeanteil zum Düsenstock leitbar ist. Der Abgabeanteil kann gegenüber dem Aufnahmeanteil rotierbar sein, insbesondere in einem Winkel von mehr als oder bis zu 45° oder von mehr oder bis zu 90° oder von mehr oder bis zu 180° oder von mehr oder bis zu 270° oder von mehr oder bis zu 360°. Bevorzugt ist der Abgabeanteil mit einer Hohlwelle, insbesondere eines Roboters oder Roboterarms oder eines Orbitalschweißrobotors, verbunden oder in Kontakt bringbar, insbesondere reibschlüssig und/oder formschlüssig in Kontakt bringbar.

Weiterhin weist die Schweißvorrichtung eine Zuführeinrichtung zum Überführen des Schweißdrahtes aus einer ersten Orientierung in eine zweite Orientierung auf. Der Schweißdraht ist dabei in der ersten Orientierung der Zuführeinrichtung zuführbar und in der zweiten Orientierung aus der Zuführeinrichtung ausleitbar. Der Schweißdraht ist bevorzugt in Richtung des Düsenstocks, insbesondere in Richtung der Zuführeinrichtung, aus der Ausrichteinrichtung ausleitbar, wobei die Zuführeinrichtung eine bevorzugt kegelförmige oder gebogene, insbesondere konkave oder konvexe, Zuführfläche aufweist. Die Zuführeinrichtung kann zumindest ein Basisteil und ein Wechselteil aufweisen oder ausbilden, wobei das Wechselteil die kegelförmige Zuführfläche aufweist. Dies ist vorteilhaft, da das Wechselteil bevorzugt ein Verschleißteil ist. Zwischen der Zuführeinrichtung und der Stromkontaktdüse ist bevorzugt ein oder genau ein oder nur ein Schweißdraht anordenbar. Bevorzugt wird durch die Zuführfläche der Transportpfad zum Leiten des Schweißdrahts in der Zuführeinrichtung derart verjüngt oder begrenzt oder in seiner Öffnungsweite derart reduziert, dass nur weniger als zwei Schweißdrähte und somit bevorzugt genau ein Schweißdraht in dem Transportpfad der Zuführeinrichtung anordenbar ist. Somit kann sich bevorzugt nur genau ein Schweißdraht vollständig durch die Zuführeinrichtung hindurch erstrecken. Die Zuführeinrichtung wird bevorzugt zumindest teilweise mittels eines Sinterverfahrens, insbesondere eines Lasersinterverfahrens oder eines additiven Verfahrens, bei dem Filamente verwendet werden, die Metall aufweisen und bei dem nach einem additiven Schritt ein Sinterschritt durchgeführt wird, hergestellt. Insbesondere kann das Wechselteil mittels Sintern bzw. einem solchen Verfahren hergestellt werden. Weiterhin weist die Schweißvorrichtung ein längliches Leitungselement auf. Durch das Leitungselement sind mehrere, insbesondere zwei oder genau zwei oder mehr als zwei Schweißdrahtseelen aufnehmbar. Erfindungsgemäß sind die Schweißdrahtseelen über ein erstes Leitungselementende in das Leitungselement einbringbar und der in den Schweißdrahtseelen geführte Schweißdraht ist über ein zweites Leitungselementende aus dem Leitungselement heraus führbar.

Bevorzugt ist ein oder mindestens ein oder genau ein Anschlag zur Begrenzung der Eindringtiefe der Schweißdrahtseelen in das Leitungselement vorgesehen. Der Anschlag kann Teil einer Zuordeneinrichtung sein. Der aus dem Leitungselement über das zweite Leitungselementende heraus geführte Schweißdraht ist in Richtung der Zuführeinrichtung leitbar, insbesondere in der ersten Orientierung in die Zuführeinrichtung einbringbar. Die Zuordeneinrichtung bildet bevorzugt mindestens zwei axiale Öffnungen aus. Das Ende einer Schweißdrahtseele ist bevorzugt definiert vor einer Öffnung anordenbar, wobei der durch diese Schweißdrahtseele geführte Draht bzw. Schweißdraht durch die Öffnung leitbar ist. Das Ende einer weiteren Schweißdrahtseele ist bevorzugt definiert vor einer anderen Öffnung anordenbar, wobei der durch die weitere Schweißdrahtseele geleitete weitere Draht durch die weitere Öffnung leitbar ist. Die Zuordeneinrichtung bildet bevorzugt einen Zuordenanteil aus, durch den die Zuordnung der Schweißdrahtseele zur Öffnung und der weiteren Schweißdrahtseele zur anderen Öffnung bewirkbar ist.

Ferner kann die Schweißvorrichtung eine Trenneinrichtung, insbesondere zum Trennen von Arbeitsgas und Schweißdraht aufweisen. Die Trenneinrichtung weist bevorzugt zumindest zwei Bereitstelleinrichtungen auf. Bevorzugt ist über jede Bereitstelleinrichtung Strom, Arbeits-Gas und Schweißdraht aufnehmbar. Die Trenneinrichtung kann mehrere Abführeinrichtungen aufweisen. Die Anzahl der Abführeinrichtungen kann größer als die Anzahl der Bereitstelleinrichtungen sein.

Die über die Bereitstelleinrichtungen zugeführten Schweißdrähte sind bevorzugt über eine Schweißdrahtabführeinrichtung aus der Trenneinrichtung ausleitbar. Die über die Bereitstelleinrichtungen zugeführten Arbeits-Gase sind bevorzugt über eine oder mehrere Gasauslässe aus der Trenneinrichtung ausleitbar. Die Gasauslässe sind bevorzugt mit Gaseinkoppeleinrichtungen zum erneuten Einkoppeln der Arbeits-Gase in den Transportpfad des Schweißdrahtes oder zum Umfließen des Schweißdrahtes oder zur Einbringung in denselben Leitungsabschnitt verbunden. Die Gaseinkoppeleinrichtungen können Bestandteile der Ausrichteinrichtung, insbesondere des Aufnahmeanteils, oder der Zuführeinrichtung oder der Zuordeneinrichtung sein.

Weiterhin kann die Schweißvorrichtung mehrere Quelleneinrichtungen aufweisen. Bevorzugt weist jede Quelleneinrichtung eine Stromquelle, Arbeits-Gas-Quelle und Schweißdrahtquelle auf. Bevorzugt ist jede Quelleneinrichtung über eine Verbindungseinrichtung mit einer Bereitstelleinrichtung verbunden. Die Stromquelle, Arbeits-Gas-Quelle und/oder Schweißdrahtquelle kann bzw. können, insbesondere bezüglich eines Schweißdrahts, auch einzeln oder kombiniert bereitgestellt werden, insbesondere mittels individueller Bereitstelleinrichtungen oder mittels kombinierter Bereitstelleinrichtungen.

Zusätzlich oder alternativ kann sich die vorliegende Erfindung auf ein Schweißvorrichtung beziehen, welche bevorzugt mindestens eine Zuführeinrichtung zum Überführen des Schweißdrahtes aus einer ersten Orientierung in eine zweite Orientierung aufweist, wobei der Schweißdraht in der ersten Orientierung der Zuführeinrichtung zuführbar ist und in der zweiten Orientierung aus der Zuführeinrichtung ausleitbar ist, insbesondere in Richtung eines Düsenstocks oder eines Brenners leitbar ist, wobei die Zuführeinrichtung eine bevorzugt kegelförmige Zuführfläche aufweist, und/oder ein längliches Leitungselement aufweist, wobei durch das Leitungselement mehrere Schweißdrahtseelen aufnehmbar sind, wobei über ein erstes Leitungselementende die Schweißdrahtseelen in das Leitungselement einbringbar sind und wobei der in den Schweißdrahtseelen geführte Schweißdraht über ein zweites Leitungselementende aus dem Leitungselement heraus führbar ist, wobei der aus dem Leitungselement über das zweite Leitungselementende heraus geführte Schweißdraht in Richtung der Zuführeinrichtung oder des Brenners leitbar ist, insbesondere in der ersten Orientierung in die Zuführeinrichtung eindringt, und/oder eine Ausrichteinrichtung und/oder eine Trenneinrichtung und/oder Zuordeneinrichtung und/oder ein Leitungselement, insbesondere mit einer Zuordeneinrichtung, aufweist.

Bevorzugt weist die Schweißvorrichtung, welche eine Zuführeinrichtung im Sinne der vorliegenden Erfindung aufweist, ebenfalls mindestens eine oder genau eine Stromkontaktdüse und/oder mindestens einen oder genau einen Düsenstock auf. Die Stromkontaktdüse kann dabei bevorzugt eine längliche Führungseinrichtung zum Führen eines Schweißdrahtes aufweisen. Weiterhin kann die Stromkontaktdüse bevorzugt an oder in dem Düsenstock angeordnet sein.

Die Schweißvorrichtung weist somit bevorzugt eine Zuführeinrichtung zum Überführen eines Schweißdrahtes aus einer ersten Orientierung in eine zweite Orientierung auf. Der Schweißdraht ist dabei bevorzugt in einer ersten Orientierung der Zuführeinrichtung zuführbar und ist bevorzugt in einer zweiten Orientierung aus der Zuführeinrichtung ausleitbar, insbesondere in Richtung des Düsenstocks leitbar, wobei die Zuführeinrichtung eine bevorzugt kegelförmige oder geneigte Zuführfläche aufweist oder ausbildet. Die Zuführfläche kann bevorzugt gehärtet oder beschichtet sein, insbesondere weist die Zuführfläche bevorzugt eine größere Festigkeit und/oder Härte auf als die Stromkontaktdüse.

Zwischen der Zuführeinrichtung und der Stromkontaktdüse ist bevorzugt nur ein oder genau ein Schweißdraht anordenbar. Diese Lösung ist vorteilhaft, da nur genau das Material dieses einen Schweißdrahts zum Erzeugen der Schweißnaht verwendet werden kann. Dadurch wird auf vorteilhafte Weise sichergestellt, dass die Schweißnahtqualität an der jeweiligen Stelle die richtigen Materialeigenschaften aufweist.

Mindestens ein Anschlag ist gemäß einer weiten bevorzugten Ausführungsform zur Begrenzung der Eindringtiefe der Schweißdrahtseelen in das Leitungselement der vorliegenden Erfindung vorgesehen. Diese Ausführungsform ist vorteilhaft, da durch den Anschlag eine Relativposition zwischen der jeweiligen Schweißdrahtseele und dem Leitungselement vorgebbar ist.

Der Anschlag ist gemäß einer weiteren bevorzugten Ausführungsform der vorliegenden Erfindung Teil einer Zuordeneinrichtung. Die Zuordeneinrichtung bildet dabei bevorzugt mindestens zwei oder genau zwei axiale Öffnungen aus. Das Ende einer Schweißdrahtseele ist bevorzugt definiert vor einer Öffnung anordenbar, wobei der durch diese Schweißdrahtseele geführte Schweißdraht durch die Öffnung leitbar ist und das Ende einer weiteren Schweißdrahtseele ist definiert vor einer anderen Öffnung anordenbar. Der durch die weitere Schweißdrahtseele geleitete weitere Schweißdraht ist bevorzugt durch die weitere Öffnung leitbar. Die Zuordeneinrichtung bildet bevorzugt einen Zuordenanteil aus, durch den die Zuordnung der Schweißdrahtseele zur Öffnung und der weiteren Schweißdrahtseele zur anderen Öffnung bewirkbar ist. Diese Ausführungsform ist vorteilhaft, da dadurch die Austrittsrichtung des Schweißdrahts aus der jeweiligen Schweißdrahtseele vorgebbar ist, wodurch mechanische Belastungen aufgrund von ungewünschten elastischen und/oder plastischen Verformungen des Schweißdrahts reduziert oder definiert vorgegeben oder verhindert werden können.

Eine Ausrichteinrichtung ist gemäß einer weiteren bevorzugten Ausführungsform der vorliegenden Erfindung vorgesehen. Der Düsenstock ist dabei bevorzugt zumindest mittelbar mit der Ausrichteinrichtung verbunden, wobei ein Schweißdraht durch die Ausrichteinrichtung hindurch in den Düsenstock, insbesondere die Stromkontaktdüse, leitbar ist. Die Ausrichteinrichtung weist bevorzugt einen Aufnahmeanteil und/oder einen Abgabeanteil auf, wobei über den Aufnahmeanteil Strom und/oder Arbeits-Gas in die Ausrichteinrichtung einleitbar ist und/oder wobei der eingeleitete Strom oder das eingeleitete Arbeits-Gas über den Abgabeanteil zum Düsenstock leitbar ist. Der Abgabeanteil ist dabei bevorzugt gegenüber dem Aufnahmeanteil rotierbar, insbesondere rotierbar gelagert. Diese Ausführungsform ist vorteilhaft, da eine Strom- und/oder Gaszuführung sehr platzsparend bzw. kompakt ermöglicht wird.

Die Zuführeinrichtung weist gemäß einer weiteren bevorzugten Ausführungsform der vorliegenden Erfindung zumindest ein Basisteil und ein Wechselteil auf. Das Wechselteil weist dabei bevorzugt die, insbesondere kegelförmige, Zuführfläche auf. Diese Ausführungsform ist vorteilhaft, da das Wechselteil ausgewechselt werden kann, insbesondere nach dem es verschlissen ist. Der Verschleiß kann dabei daraus resultieren, dass ein Schweißdrahtende beim Einführen in die Zuführeinrichtung an der bevorzugt kegelförmigen oder geneigten Zuführfläche entlanggleitet oder entlangschleift oder entlangkratzt.

Gemäß einer weiteren bevorzugten Ausführungsform der vorliegenden Erfindung ist eine Trenneinrichtung vorgesehen. Die Trenneinrichtung weist bevorzugt zumindest zwei oder genau zwei Bereitstelleinrichtungen auf. Bevorzugt ist über jede Bereitstelleinrichtung Strom, Gas und/oder Schweißdraht aufnehmbar. Die über die Bereitstelleinrichtungen zugeführten Schweißdrähte sind bevorzugt über eine Schweißdrahtabführeinrichtung aus der Trenneinrichtung ausleitbar. Zusätzlich oder alternativ sind die über die Bereitstelleinrichtungen zugeführten Gase über einen oder mehrere Gasauslässe aus der Trenneinrichtung ausleitbar. Die Gasauslässe sind bevorzugt mit Gaseinkoppeleinrichtungen zum erneuten Einkoppeln der Gase in den Transportpfad des Schweißdrahtes verbunden. Die Gaseinkoppeleinrichtungen sind bevorzugt Bestandteile der Ausrichteinrichtung, insbesondere des Aufnahmeanteils, oder der Zuführeinrichtung oder der Zuordeneinrichtung. Die Trenneinrichtung weist gemäß einer weiteren bevorzugten Ausführungsform der vorliegenden Erfindung mehrere Abführeinrichtungen auf. Die Anzahl der Abführeinrichtungen ist bevorzugt größer als die Anzahl der Bereitstelleinrichtungen. Diese Ausführungsform ist vorteilhaft, da das zusammen mit einem jeweiligen Schweißdraht bereitgestellte Gas vom Schweißdraht separierbar ist und somit über einen anderen Pfad, insbesondere eine andere Leitung oder Leitungsverbindung, insbesondere Rohr oder Schlauch, in Richtung Stromkontaktdüse förderbar ist.

Gemäß einer weiteren bevorzugten Ausführungsform der vorliegenden Erfindung sind mehrere Quelleneinrichtungen, insbesondere mindestens zwei oder genau zwei, vorgesehen, wobei jede Quelleneinrichtung eine Stromquelle, Arbeits-Gas-Quelle und/oder Schweißdrahtquelle aufweist, wobei jede Quelleneinrichtung über eine Verbindungseinrichtung mit einer oder mindestens einer Bereitstelleinrichtung verbunden ist. Bevorzugt unterscheiden sich die von den Quelleneinrichtungen bereitgestellten Schweißdrähte, insbesondere hinsichtlich der Materialzusammensetzung und/oder einer oder mehrerer geometrischen Eigenschaft/en. Zusätzlich oder alternativ können sich die von der jeweiligen ArbeitsGas-Quellen bereitgestellten Arbeitsgase, insbesondere hinsichtlich der Zusammensetzung und/oder der Dichte, unterscheiden. Zusätzlich oder alternativ kann die Stromstärke, welche von den unterschiedlichen Stromquellen erzeugt wird, verschieden sein. Diese Ausführungsform ist vorteilhaft, da die Schweißdrähte der unterschiedlichen Quelleneinrichtungen durch dasselbe Leitungselement leitbar sind und das dem jeweiligen Schweißdraht zugeordnete Gas bzw. Arbeitsgas über eine Leitung transportierbar oder leitbar ist, welche von der Leitung, durch die das dem anderen Schweißdraht zugeordnete Gas bzw. Arbeitsgas, führbar oder leitbar ist, verschieden ist. Somit wird eine vorteilhafte Schweißdrahtführung beider bzw. aller Schweißdrähte ermöglicht, ohne dass dadurch eine unerwünschte Vermischung der Gase bzw. Arbeitsgase erfolgt.

Weiterhin kann sich die vorliegende Erfindung auf ein Verfahren zum Betrieb einer Schweißvorrichtung beziehen, welche eine erfindungsgemäße Zuführeinrichtung aufweist.

Weiterhin kann sich die vorliegende Erfindung auf eine Schweißvorrichtung mit einer solchen Ausrichteinrichtung beziehen.

Bevorzugt weist die Schweißvorrichtung, welche eine Ausrichteinrichtung im Sinne der vorliegenden Erfindung aufweist, ebenfalls mindestens eine oder genau eine Stromkontaktdüse und/oder mindestens einen oder genau einen Düsenstock auf. Die Stromkontaktdüse kann dabei bevorzugt eine längliche Führungseinrichtung zum Führen eines Schweißdrahtes aufweisen. Weiterhin kann die Stromkontaktdüse bevorzugt an oder in dem Düsenstock angeordnet sein.

Der Düsenstock ist somit bevorzugt zumindest mittelbar mit einer Ausrichteinrichtung verbunden. Ein Schweißdraht ist bevorzugt durch die Ausrichteinrichtung hindurch in den Düsenstock, insbesondere in eine Stromkontaktdüse, leitbar. Die Ausrichteinrichtung weist bevorzugt einen Aufnahmeanteil und einen Abgabeanteil auf, wobei über den Aufnahmeanteil Strom und/oder Arbeits-Gas in die Ausrichteinrichtung einleitbar ist und wobei der eingeleitete Strom oder das eingeleitete Arbeits-Gas über den Abgabeanteil zum Düsenstock leitbar ist. Der Abgabeanteil ist dabei bevorzugt gegenüber dem Aufnahmeanteil rotierbar, insbesondere rotierbar gelagert. Diese Lösung ist vorteilhaft, da eine Strom-und/oder Gaszuführung sehr platzsparend bzw. kompakt ermöglicht wird.

Gemäß einer weiteren bevorzugten Ausführungsform der vorliegenden Erfindung weist die Schweißvorrichtung eine Zuführeinrichtung zum Überführen des Schweißdrahtes, insbesondere eines ersten Schweißdrahts aus einer ersten Quelleneinrichtung und/oder eines zweiten Schweißdrahts aus einer zweiten Quelleneinrichtung, aus einer ersten Orientierung in eine zweite Orientierung auf. Der Schweißdraht ist in der ersten Orientierung der Zuführeinrichtung zuführbar und der Schweißdraht ist in der zweiten Orientierung aus der Zuführeinrichtung ausleitbar, insbesondere in Richtung des Düsenstocks leitbar. Die Zuführeinrichtung weist dabei bevorzugt eine bevorzugt kegelförmige oder geneigte Zuführfläche auf. Diese Ausführungsform ist vorteilhaft, da dadurch der Schweißdraht, insbesondere selbsttätig, in eine definiert ausgerichtete Orientierung überführbar ist. Bevorzugt weist die Zuführeinrichtung eine Öffnung, durch welche der Schweißdraht hindurchführbar ist. Bevorzugt ist der Durchmesser der Öffnung kleiner als die Summe der Durchmesser der von den Quelleneinrichtungen bereitgestellten Schweißdrähten.

Gemäß einer weiteren bevorzugten Ausführungsform der vorliegenden Erfindung weist die Schweißvorrichtung ein längliches Leitungselement auf. Durch das Leitungselement sind bevorzugt mehrere, insbesondere mindestens oder genau zwei, Schweißdrahtseelen aufnehmbar. Über ein erstes Leitungselementende sind die Schweißdrahtseelen in das Leitungselement einbringbar und wobei der in den Schweißdrahtseelen jeweils geführte Schweißdraht über ein zweites Leitungselementende aus dem Leitungselement und bevorzugt aus der jeweiligen Schweißdrahtseele heraus führbar ist. Der aus dem Leitungselement über das zweite Leitungselementende heraus geführte Schweißdraht ist bevorzugt in Richtung der Zuführeinrichtung leitbar bzw. kann in der ersten Orientierung in die Zuführeinrichtung eindringen. Diese Ausführungsform ist vorteilhaft, da durch das Leitungselement mehrere Schweißdrähte kompakt und geschützt bereitstellbar sind.

Gemäß einer bevorzugten Ausführungsform der vorliegenden Erfindung ist zwischen der Zuführeinrichtung und der Stromkontaktdüse nur ein Schweißdraht anordenbar. Diese Ausführungsform ist vorteilhaft, da nur genau das Material dieses einen Schweißdrahts zum Erzeugen der Schweißnaht verwendet werden kann. Dadurch wird auf vorteilhafte Weise sichergestellt, dass die Schweißnahtqualität an der jeweiligen Stelle die richtigen Materialeigenschaften aufweist.

Mindestens ein Anschlag ist gemäß einer weiten bevorzugten Ausführungsform zur Begrenzung der Eindringtiefe der Schweißdrahtseelen in das Leitungselement der vorliegenden Erfindung vorgesehen. Diese Ausführungsform ist vorteilhaft, da durch den Anschlag eine Relativposition zwischen der jeweiligen Schweißdrahtseele und dem Leitungselement vorgebbar ist.

Der Anschlag ist gemäß einer weiteren bevorzugten Ausführungsform der vorliegenden Erfindung Teil einer Zuordeneinrichtung. Die Zuordeneinrichtung bildet dabei bevorzugt mindestens zwei oder genau zwei axiale Öffnungen aus. Das Ende einer Schweißdrahtseele ist bevorzugt definiert vor einer Öffnung anordenbar, wobei der durch diese Schweißdrahtseele geführte Schweißdraht durch die Öffnung leitbar ist und das Ende einer weiteren Schweißdrahtseele ist definiert vor einer anderen Öffnung anordenbar. Der durch die weitere Schweißdrahtseele geleitete weitere Schweißdraht ist bevorzugt durch die weitere Öffnung leitbar. Die Zuordeneinrichtung bildet bevorzugt einen Zuordenanteil aus, durch den die Zuordnung der Schweißdrahtseele zur Öffnung und der weiteren Schweißdrahtseele zur anderen Öffnung bewirkbar ist. Diese Ausführungsform ist vorteilhaft, da dadurch die Austrittsrichtung des Schweißdrahts aus der jeweiligen Schweißdrahtseele vorgebbar ist, wodurch mechanische Belastungen aufgrund von ungewünschten elastischen und/oder plastischen Verformungen des Schweißdrahts reduziert oder definiert vorgegeben oder verhindert werden können.

Die Zuführeinrichtung weist gemäß einer weiteren bevorzugten Ausführungsform der vorliegenden Erfindung zumindest ein Basisteil und ein Wechselteil auf. Das Wechselteil weist dabei bevorzugt die, insbesondere kegelförmige, Zuführfläche auf. Diese Ausführungsform ist vorteilhaft, da das Wechselteil ausgewechselt werden kann, insbesondere nach dem es verschlissen ist. Der Verschleiß kann dabei daraus resultieren, dass ein Schweißdrahtende beim Einführen in die Zuführeinrichtung an der bevorzugt kegelförmigen oder geneigten Zuführfläche entlanggleitet oder entlangschleift oder entlangkratzt.

Gemäß einer weiteren bevorzugten Ausführungsform der vorliegenden Erfindung ist eine Trenneinrichtung vorgesehen. Die Trenneinrichtung weist bevorzugt zumindest zwei oder genau zwei Bereitstelleinrichtungen auf. Bevorzugt ist über jede Bereitstelleinrichtung Strom, Gas und/oder Schweißdraht aufnehmbar. Die über die Bereitstelleinrichtungen zugeführten Schweißdrähte sind bevorzugt über eine Schweißdrahtabführeinrichtung aus der Trenneinrichtung ausleitbar. Zusätzlich oder alternativ sind die über die Bereitstelleinrichtungen zugeführten Gase über einen oder mehrere Gasauslässe aus der Trenneinrichtung ausleitbar. Die Gasauslässe sind bevorzugt mit Gaseinkoppeleinrichtungen zum erneuten Einkoppeln der Gase in den Transportpfad des Schweißdrahtes verbunden. Die Gaseinkoppeleinrichtungen sind bevorzugt Bestandteile der Ausrichteinrichtung, insbesondere des Aufnahmeanteils, oder der Zuführeinrichtung oder der Zuordeneinrichtung. Die Trenneinrichtung weist gemäß einer weiteren bevorzugten Ausführungsform der vorliegenden Erfindung mehrere Abführeinrichtungen auf. Die Anzahl der Abführeinrichtungen ist bevorzugt größer als die Anzahl der Bereitstelleinrichtungen. Diese Ausführungsform ist vorteilhaft, da das zusammen mit einem jeweiligen Schweißdraht bereitgestellte Gas vom Schweißdraht separierbar ist und somit über einen anderen Pfad, insbesondere eine andere Leitung oder Leitungsverbindung, insbesondere Rohr oder Schlauch, in Richtung Stromkontaktdüse förderbar ist. Gemäß einer weiteren bevorzugten Ausführungsform der vorliegenden Erfindung sind mehrere Quelleneinrichtungen, insbesondere mindestens zwei oder genau zwei, vorgesehen, wobei jede Quelleneinrichtung eine Stromquelle, Arbeits-Gas-Quelle und/oder Schweißdrahtquelle aufweist, wobei jede Quelleneinrichtung über eine Verbindungseinrichtung mit einer oder mindestens einer Bereitstelleinrichtung verbunden ist. Bevorzugt unterscheiden sich die von den Quelleneinrichtungen bereitgestellten Schweißdrähte, insbesondere hinsichtlich der Materialzusammensetzung und/oder einer oder mehrerer geometrischen Eigenschaft/en. Zusätzlich oder alternativ können sich die von der jeweiligen Arbeits-Gas-Quellen bereitgestellten Arbeitsgase, insbesondere hinsichtlich der Zusammensetzung und/oder der Dichte, unterscheiden. Zusätzlich oder alternativ kann die Stromstärke, welche von den unterschiedlichen Stromquellen erzeugt wird, verschieden sein. Diese Ausführungsform ist vorteilhaft, da die Schweißdrähte der unterschiedlichen Quelleneinrichtungen durch dasselbe Leitungselement leitbar sind und das dem jeweiligen Schweißdraht zugeordnete Gas bzw. Arbeitsgas über eine Leitung transportierbar oder leitbar ist, welche von der Leitung, durch die das dem anderen Schweißdraht zugeordnete Gas bzw. Arbeitsgas, führbar oder leitbar ist, verschieden ist. Somit wird eine vorteilhafte Schweißdrahtführung beider bzw. aller Schweißdrähte ermöglicht, ohne dass dadurch eine unerwünschte Vermischung der Gase bzw. Arbeitsgase erfolgt.

Weiterhin kann sich die vorliegende Erfindung auf ein Verfahren zum Betrieb einer Schweißvorrichtung beziehen, welche eine erfindungsgemäße Ausrichteinrichtung aufweist.

Weiterhin kann sich die vorliegende Erfindung auf eine Trenneinrichtung oder eine Schweißvorrichtung mit einer solchen Trenneinrichtung beziehen.

Bevorzugt weist die Schweißvorrichtung, welche eine Trenneinrichtung im Sinne der vorliegenden Erfindung aufweist, ebenfalls mindestens eine oder genau eine Stromkontaktdüse und/oder mindestens einen oder genau einen Düsenstock auf. Die Stromkontaktdüse kann dabei bevorzugt eine längliche Führungseinrichtung zum Führen eines Schweißdrahtes aufweisen. Weiterhin kann die Stromkontaktdüse bevorzugt an oder in dem Düsenstock angeordnet sein.

Die Trenneinrichtung weist bevorzugt zumindest zwei oder genau zwei Bereitstelleinrichtungen auf. Bevorzugt ist über jede Bereitstelleinrichtung Strom, Gas und/oder Schweißdraht aufnehmbar. Die über die Bereitstelleinrichtungen zugeführten Schweißdrähte sind bevorzugt über eine Schweißdrahtabführeinrichtung aus der Trenneinrichtung ausleitbar. Zusätzlich oder alternativ sind die über die Bereitstelleinrichtungen zugeführten Gase über einen oder mehrere Gasauslässe aus der Trenneinrichtung ausleitbar. Die Gasauslässe sind bevorzugt mit Gaseinkoppeleinrichtungen zum erneuten Einkoppeln der Gase in den Transportpfad des Schweißdrahtes verbunden. Die Gaseinkoppeleinrichtungen sind bevorzugt Bestandteile einer Ausrichteinrichtung, insbesondere eines Aufnahmeanteils, oder einer Zuführeinrichtung oder einer Zuordeneinrichtung. Die Trenneinrichtung weist gemäß einer bevorzugten Ausführungsform der vorliegenden Erfindung mehrere Abführeinrichtungen auf. Die Anzahl der Abführeinrichtungen ist bevorzugt größer als die Anzahl der Bereitstelleinrichtungen. Diese Lösung ist vorteilhaft, da das zusammen mit einem jeweiligen Schweißdraht bereitgestellte Gas vom Schweißdraht separierbar ist und somit über einen anderen Pfad, insbesondere eine andere Leitung oder Leitungsverbindung, insbesondere Rohr oder Schlauch, in Richtung Stromkontaktdüse förderbar ist.

Gemäß einer weiteren bevorzugten Ausführungsform der vorliegenden Erfindung weist die Schweißvorrichtung eine Zuführeinrichtung zum Überführen des Schweißdrahtes, insbesondere eines ersten Schweißdrahts aus einer ersten Quelleneinrichtung und/oder eines zweiten Schweißdrahts aus einer zweiten Quelleneinrichtung, aus einer ersten Orientierung in eine zweite Orientierung auf. Der Schweißdraht ist in der ersten Orientierung der Zuführeinrichtung zuführbar und der Schweißdraht ist in der zweiten Orientierung aus der Zuführeinrichtung ausleitbar, insbesondere in Richtung des Düsenstocks leitbar. Die Zuführeinrichtung weist dabei bevorzugt eine bevorzugt kegelförmige oder geneigte Zuführfläche auf. Diese Ausführungsform ist vorteilhaft, da dadurch der Schweißdraht, insbesondere selbsttätig, in eine definiert ausgerichtete Orientierung überführbar ist. Bevorzugt weist die Zuführeinrichtung eine Öffnung, durch welche der Schweißdraht hindurchführbar ist. Bevorzugt ist der Durchmesser der Öffnung kleiner als die Summe der Durchmesser der von den Quelleneinrichtungen bereitgestellten Schweißdrähten.

Gemäß einer weiteren bevorzugten Ausführungsform der vorliegenden Erfindung weist die Schweißvorrichtung ein längliches Leitungselement auf. Durch das Leitungselement sind bevorzugt mehrere, insbesondere mindestens oder genau zwei, Schweißdrahtseelen aufnehmbar. Über ein erstes Leitungselementende sind die Schweißdrahtseelen in das Leitungselement einbringbar und wobei der in den Schweißdrahtseelen jeweils geführte Schweißdraht über ein zweites Leitungselementende aus dem Leitungselement und bevorzugt aus der jeweiligen Schweißdrahtseele heraus führbar ist. Der aus dem Leitungselement über das zweite Leitungselementende heraus geführte Schweißdraht ist bevorzugt in Richtung der Zuführeinrichtung leitbar bzw. kann in der ersten Orientierung in die Zuführeinrichtung eindringen. Diese Ausführungsform ist vorteilhaft, da durch das Leitungselement mehrere Schweißdrähte kompakt und geschützt bereitstellbar sind.

Gemäß einer bevorzugten Ausführungsform der vorliegenden Erfindung ist zwischen der Zuführeinrichtung und der Stromkontaktdüse nur ein Schweißdraht anordenbar. Diese Ausführungsform ist vorteilhaft, da nur genau das Material dieses einen Schweißdrahts zum Erzeugen der Schweißnaht verwendet werden kann. Dadurch wird auf vorteilhafte Weise sichergestellt, dass die Schweißnahtqualität an der jeweiligen Stelle die richtigen Materialeigenschaften aufweist.

Mindestens ein Anschlag ist gemäß einer weiten bevorzugten Ausführungsform zur Begrenzung der Eindringtiefe der Schweißdrahtseelen in das Leitungselement der vorliegenden Erfindung vorgesehen. Diese Ausführungsform ist vorteilhaft, da durch den Anschlag eine Relativposition zwischen der jeweiligen Schweißdrahtseele und dem Leitungselement vorgebbar ist.

Der Anschlag ist gemäß einer weiteren bevorzugten Ausführungsform der vorliegenden Erfindung Teil einer Zuordeneinrichtung. Die Zuordeneinrichtung bildet dabei bevorzugt mindestens zwei oder genau zwei axiale Öffnungen aus. Das Ende einer Schweißdrahtseele ist bevorzugt definiert vor einer Öffnung anordenbar, wobei der durch diese Schweißdrahtseele geführte Schweißdraht durch die Öffnung leitbar ist und das Ende einer weiteren Schweißdrahtseele ist definiert vor einer anderen Öffnung anordenbar. Der durch die weitere Schweißdrahtseele geleitete weitere Schweißdraht ist bevorzugt durch die weitere Öffnung leitbar. Die Zuordeneinrichtung bildet bevorzugt einen Zuordenanteil aus, durch den die Zuordnung der Schweißdrahtseele zur Öffnung und der weiteren Schweißdrahtseele zur anderen Öffnung bewirkbar ist. Diese Ausführungsform ist vorteilhaft, da dadurch die Austrittsrichtung des Schweißdrahts aus der jeweiligen Schweißdrahtseele vorgebbar ist, wodurch mechanische Belastungen aufgrund von ungewünschten elastischen und/oder plastischen Verformungen des Schweißdrahts reduziert oder definiert vorgegeben oder verhindert werden können.

Eine Ausrichteinrichtung ist gemäß einer weiteren bevorzugten Ausführungsform der vorliegenden Erfindung vorgesehen. Der Düsenstock ist dabei bevorzugt zumindest mittelbar mit der Ausrichteinrichtung verbunden, wobei ein Schweißdraht durch die Ausrichteinrichtung hindurch in den Düsenstock, insbesondere die Stromkontaktdüse, leitbar ist. Die Ausrichteinrichtung weist bevorzugt einen Aufnahmeanteil und/oder einen Abgabeanteil auf, wobei über den Aufnahmeanteil Strom und/oder Arbeits-Gas in die Ausrichteinrichtung einleitbar ist und/oder wobei der eingeleitete Strom oder das eingeleitete Arbeits-Gas über den Abgabeanteil zum Düsenstock leitbar ist. Der Abgabeanteil ist dabei bevorzugt gegenüber dem Aufnahmeanteil rotierbar, insbesondere rotierbar gelagert. Diese Ausführungsform ist vorteilhaft, da eine Strom- und/oder Gaszuführung sehr platzsparend bzw. kompakt ermöglicht wird.

Die Zuführeinrichtung weist gemäß einer weiteren bevorzugten Ausführungsform der vorliegenden Erfindung zumindest ein Basisteil und ein Wechselteil auf. Das Wechselteil weist dabei bevorzugt die, insbesondere kegelförmige, Zuführfläche auf. Diese Ausführungsform ist vorteilhaft, da das Wechselteil ausgewechselt werden kann, insbesondere nach dem es verschlissen ist. Der Verschleiß kann dabei daraus resultieren, dass ein Schweißdrahtende beim Einführen in die Zuführeinrichtung an der bevorzugt kegelförmigen oder geneigten Zuführfläche entlanggleitet oder entlangschleift oder entlangkratzt.

Gemäß einer weiteren bevorzugten Ausführungsform der vorliegenden Erfindung sind mehrere Quelleneinrichtungen, insbesondere mindestens zwei oder genau zwei, vorgesehen, wobei jede Quelleneinrichtung eine Stromquelle, Arbeits-Gas-Quelle und/oder Schweißdrahtquelle aufweist, wobei jede Quelleneinrichtung über eine Verbindungseinrichtung mit einer oder mindestens einer Bereitstelleinrichtung verbunden ist. Bevorzugt unterscheiden sich die von den Quelleneinrichtungen bereitgestellten Schweißdrähte, insbesondere hinsichtlich der Materialzusammensetzung und/oder einer oder mehrerer geometrischen Eigenschaft/en. Zusätzlich oder alternativ können sich die von der jeweiligen Arbeits-Gas-Quellen bereitgestellten Arbeitsgase, insbesondere hinsichtlich der Zusammensetzung und/oder der Dichte, unterscheiden. Zusätzlich oder alternativ kann die Stromstärke, welche von den unterschiedlichen Stromquellen erzeugt wird, verschieden sein. Diese Ausführungsform ist vorteilhaft, da die Schweißdrähte der unterschiedlichen Quelleneinrichtungen durch dasselbe Leitungselement leitbar sind und das dem jeweiligen Schweißdraht zugeordnete Gas bzw. Arbeitsgas über eine Leitung transportierbar oder leitbar ist, welche von der Leitung, durch die das dem anderen Schweißdraht zugeordnete Gas bzw. Arbeitsgas, führbar oder leitbar ist, verschieden ist. Somit wird eine vorteilhafte Schweißdrahtführung beider bzw. aller Schweißdrähte ermöglicht, ohne dass dadurch eine unerwünschte Vermischung der Gase bzw. Arbeitsgase erfolgt.

Weiterhin kann sich die vorliegende Erfindung auf ein Verfahren zum Betrieb einer Schweißvorrichtung beziehen, welche eine erfindungsgemäße Trenneinrichtung aufweist.

Weiterhin kann sich die vorliegende Erfindung auf ein Leitungselement oder eine Schweißvorrichtung mit einem solchen Leitungselement beziehen.

Bevorzugt weist die Schweißvorrichtung, welche ein Leitungselement im Sinne der vorliegenden Erfindung aufweist, ebenfalls mindestens eine oder genau eine Stromkontaktdüse und/oder mindestens einen oder genau einen Düsenstock auf. Die Stromkontaktdüse kann dabei bevorzugt eine längliche Führungseinrichtung zum Führen eines Schweißdrahtes aufweisen. Weiterhin kann die Stromkontaktdüse bevorzugt an oder in dem Düsenstock angeordnet sein.

Die Schweißvorrichtung weist somit ein längliches Leitungselement auf, wobei durch das Leitungselement bevorzugt mehrere, insbesondere mindestens oder genau zwei, Schweißdrahtseelen aufnehmbar sind. Über ein erstes Leitungselementende sind die Schweißdrahtseelen in das Leitungselement einbringbar und wobei der in den Schweißdrahtseelen jeweils geführte Schweißdraht über ein zweites Leitungselementende aus dem Leitungselement und bevorzugt aus der jeweiligen Schweißdrahtseele heraus führbar ist. Der aus dem Leitungselement über das zweite Leitungselementende heraus geführte Schweißdraht ist bevorzugt in Richtung einer Zuführeinrichtung leitbar bzw. kann in der ersten Orientierung in die Zuführeinrichtung eindringen. Diese Lösung ist vorteilhaft, da durch das Leitungselement mehrere Schweißdrähte kompakt und geschützt bereitstellbar sind.

Gemäß einer weiteren bevorzugten Ausführungsform der vorliegenden Erfindung weist die Schweißvorrichtung eine Zuführeinrichtung zum Überführen des Schweißdrahtes, insbesondere eines ersten Schweißdrahts aus einer ersten Quelleneinrichtung und/oder eines zweiten Schweißdrahts aus einer zweiten Quelleneinrichtung, aus einer ersten Orientierung in eine zweite Orientierung auf. Der Schweißdraht ist in der ersten Orientierung der Zuführeinrichtung zuführbar und der Schweißdraht ist in der zweiten Orientierung aus der Zuführeinrichtung ausleitbar, insbesondere in Richtung des Düsenstocks leitbar. Die Zuführeinrichtung weist dabei bevorzugt eine bevorzugt kegelförmige oder geneigte Zuführfläche auf. Diese Ausführungsform ist vorteilhaft, da dadurch der Schweißdraht, insbesondere selbsttätig, in eine definiert ausgerichtete Orientierung überführbar ist. Bevorzugt weist die Zuführeinrichtung eine Öffnung, durch welche der Schweißdraht hindurchführbar ist. Bevorzugt ist der Durchmesser der Öffnung kleiner als die Summe der Durchmesser der von den Quelleneinrichtungen bereitgestellten Schweißdrähten.

Gemäß einer bevorzugten Ausführungsform der vorliegenden Erfindung ist zwischen der Zuführeinrichtung und der Stromkontaktdüse nur ein Schweißdraht anordenbar. Diese Ausführungsform ist vorteilhaft, da nur genau das Material dieses einen Schweißdrahts zum Erzeugen der Schweißnaht verwendet werden kann. Dadurch wird auf vorteilhafte Weise sichergestellt, dass die Schweißnahtqualität an der jeweiligen Stelle die richtigen Materialeigenschaften aufweist.

Mindestens ein Anschlag ist gemäß einer weiten bevorzugten Ausführungsform zur Begrenzung der Eindringtiefe der Schweißdrahtseelen in das Leitungselement der vorliegenden Erfindung vorgesehen. Diese Ausführungsform ist vorteilhaft, da durch den Anschlag eine Relativposition zwischen der jeweiligen Schweißdrahtseele und dem Leitungselement vorgebbar ist.

Der Anschlag ist gemäß einer weiteren bevorzugten Ausführungsform der vorliegenden Erfindung Teil einer Zuordeneinrichtung. Die Zuordeneinrichtung bildet dabei bevorzugt mindestens zwei oder genau zwei axiale Öffnungen aus. Das Ende einer Schweißdrahtseele ist bevorzugt definiert vor einer Öffnung anordenbar, wobei der durch diese Schweißdrahtseele geführte Schweißdraht durch die Öffnung leitbar ist und das Ende einer weiteren Schweißdrahtseele ist definiert vor einer anderen Öffnung anordenbar. Der durch die weitere Schweißdrahtseele geleitete weitere Schweißdraht ist bevorzugt durch die weitere Öffnung leitbar. Die Zuordeneinrichtung bildet bevorzugt einen Zuordenanteil aus, durch den die Zuordnung der Schweißdrahtseele zur Öffnung und der weiteren Schweißdrahtseele zur anderen Öffnung bewirkbar ist. Diese Ausführungsform ist vorteilhaft, da dadurch die Austrittsrichtung des Schweißdrahts aus der jeweiligen Schweißdrahtseele vorgebbar ist, wodurch mechanische Belastungen aufgrund von ungewünschten elastischen und/oder plastischen Verformungen des Schweißdrahts reduziert oder definiert vorgegeben oder verhindert werden können.

Die Zuführeinrichtung weist gemäß einer weiteren bevorzugten Ausführungsform der vorliegenden Erfindung zumindest ein Basisteil und ein Wechselteil auf. Das Wechselteil weist dabei bevorzugt die, insbesondere kegelförmige, Zuführfläche auf. Diese Ausführungsform ist vorteilhaft, da das Wechselteil ausgewechselt werden kann, insbesondere nach dem es verschlissen ist. Der Verschleiß kann dabei daraus resultieren, dass ein Schweißdrahtende beim Einführen in die Zuführeinrichtung an der bevorzugt kegelförmigen oder geneigten Zuführfläche entlanggleitet oder entlangschleift oder entlangkratzt.

Gemäß einer weiteren bevorzugten Ausführungsform der vorliegenden Erfindung ist eine Trenneinrichtung vorgesehen. Die Trenneinrichtung weist bevorzugt zumindest zwei oder genau zwei Bereitstelleinrichtungen auf. Bevorzugt ist über jede Bereitstelleinrichtung Strom, Gas und/oder Schweißdraht aufnehmbar. Die über die Bereitstelleinrichtungen zugeführten Schweißdrähte sind bevorzugt über eine Schweißdrahtabführeinrichtung aus der Trenneinrichtung ausleitbar. Zusätzlich oder alternativ sind die über die Bereitstelleinrichtungen zugeführten Gase über einen oder mehrere Gasauslässe aus der Trenneinrichtung ausleitbar. Die Gasauslässe sind bevorzugt mit Gaseinkoppeleinrichtungen zum erneuten Einkoppeln der Gase in den Transportpfad des Schweißdrahtes verbunden. Die Gaseinkoppeleinrichtungen sind bevorzugt Bestandteile der Ausrichteinrichtung, insbesondere des Aufnahmeanteils, oder der Zuführeinrichtung oder der Zuordeneinrichtung. Die Trenneinrichtung weist gemäß einer weiteren bevorzugten Ausführungsform der vorliegenden Erfindung mehrere Abführeinrichtungen auf. Die Anzahl der Abführeinrichtungen ist bevorzugt größer als die Anzahl der Bereitstelleinrichtungen. Diese Ausführungsform ist vorteilhaft, da das zusammen mit einem jeweiligen Schweißdraht bereitgestellte Gas vom Schweißdraht separierbar ist und somit über einen anderen Pfad, insbesondere eine andere Leitung oder Leitungsverbindung, insbesondere Rohr oder Schlauch, in Richtung Stromkontaktdüse förderbar ist. Gemäß einer weiteren bevorzugten Ausführungsform der vorliegenden Erfindung sind mehrere Quelleneinrichtungen, insbesondere mindestens zwei oder genau zwei, vorgesehen, wobei jede Quelleneinrichtung eine Stromquelle, Arbeits-Gas-Quelle und/oder Schweißdrahtquelle aufweist, wobei jede Quelleneinrichtung über eine Verbindungseinrichtung mit einer oder mindestens einer Bereitstelleinrichtung verbunden ist. Bevorzugt unterscheiden sich die von den Quelleneinrichtungen bereitgestellten Schweißdrähte, insbesondere hinsichtlich der Materialzusammensetzung und/oder einer oder mehrerer geometrischen Eigenschaft/en. Zusätzlich oder alternativ können sich die von der jeweiligen Arbeits-Gas-Quellen bereitgestellten Arbeitsgase, insbesondere hinsichtlich der Zusammensetzung und/oder der Dichte, unterscheiden. Zusätzlich oder alternativ kann die Stromstärke, welche von den unterschiedlichen Stromquellen erzeugt wird, verschieden sein. Diese Ausführungsform ist vorteilhaft, da die Schweißdrähte der unterschiedlichen Quelleneinrichtungen durch dasselbe Leitungselement leitbar sind und das dem jeweiligen Schweißdraht zugeordnete Gas bzw. Arbeitsgas über eine Leitung transportierbar oder leitbar ist, welche von der Leitung, durch die das dem anderen Schweißdraht zugeordnete Gas bzw. Arbeitsgas, führbar oder leitbar ist, verschieden ist. Somit wird eine vorteilhafte Schweißdrahtführung beider bzw. aller Schweißdrähte ermöglicht, ohne dass dadurch eine unerwünschte Vermischung der Gase bzw. Arbeitsgase erfolgt.

Weiterhin kann sich die vorliegende Erfindung auf ein Verfahren zum Betrieb einer Schweißvorrichtung beziehen, welche ein erfindungsgemäßes Leitungselement aufweist.

Weiterhin kann sich die vorliegende Erfindung auf eine Zuordeneinrichtung oder eine Schweißvorrichtung mit einer solchen Zuordeneinrichtung beziehen.

Bevorzugt weist die Schweißvorrichtung, welche eine Zuordeneinrichtung im Sinne der vorliegenden Erfindung aufweist, ebenfalls mindestens eine oder genau eine Stromkontaktdüse und/oder mindestens einen oder genau einen Düsenstock auf. Die Stromkontaktdüse kann dabei bevorzugt eine längliche Führungseinrichtung zum Führen eines Schweißdrahtes aufweisen. Weiterhin kann die Stromkontaktdüse bevorzugt an oder in dem Düsenstock angeordnet sein.

Die Zuordeneinrichtung bildet bevorzugt einen Anschlag, insbesondere zur Begrenzung der Eindringtiefe einer Schweißdrahtseele oder mehrerer Schweißdrahtseelen in ein Leitungselement, aus. Die Zuordeneinrichtung bildet dabei bevorzugt mindestens zwei oder genau zwei axiale Öffnungen aus bzw. weist mindestens oder genau zwei Öffnungen, welche bevorzugt nebeneinander ausgebildet sind, d.h. sich bevorzugt in einer Ebene befinden, aus. Das Ende einer Schweißdrahtseele ist bevorzugt definiert vor einer Öffnung, insbesondere vor einer dieser Öffnungen, anordenbar, wobei der durch diese Schweißdrahtseele geführte Schweißdraht durch die Öffnung leitbar ist und das Ende einer weiteren Schweißdrahtseele ist definiert vor einer anderen Öffnung anordenbar. Der durch die weitere Schweißdrahtseele geleitete weitere Schweißdraht ist bevorzugt durch die weitere Öffnung leitbar. Die Zuordeneinrichtung bildet bevorzugt einen Zuordenanteil aus, durch den die Zuordnung der Schweißdrahtseele zur Öffnung und der weiteren Schweißdrahtseele zur anderen Öffnung bewirkbar ist. Diese Lösung ist vorteilhaft, da dadurch die Austrittsrichtung des Schweißdrahts aus der jeweiligen Schweißdrahtseele vorgebbar ist, wodurch mechanische Belastungen aufgrund von ungewünschten elastischen und/oder plastischen Verformungen des Schweißdrahts reduziert oder definiert vorgegeben oder verhindert werden können. Diese Lösung ist ferner vorteilhaft, da durch den Anschlag eine Relativposition zwischen der jeweiligen Schweißdrahtseele und dem Leitungselement vorgebbar ist.

Gemäß einer weiteren bevorzugten Ausführungsform der vorliegenden Erfindung weist die Schweißvorrichtung ein längliches Leitungselement auf. Durch das Leitungselement sind bevorzugt mehrere, insbesondere mindestens oder genau zwei, Schweißdrahtseelen aufnehmbar. Über ein erstes Leitungselementende sind die Schweißdrahtseelen in das Leitungselement einbringbar und wobei der in den Schweißdrahtseelen jeweils geführte Schweißdraht über ein zweites Leitungselementende aus dem Leitungselement und bevorzugt aus der jeweiligen Schweißdrahtseele heraus führbar ist. Der aus dem Leitungselement über das zweite Leitungselementende heraus geführte Schweißdraht ist bevorzugt in Richtung der Zuführeinrichtung leitbar bzw. kann in der ersten Orientierung in die Zuführeinrichtung eindringen. Diese Ausführungsform ist vorteilhaft, da durch das Leitungselement mehrere Schweißdrähte kompakt und geschützt bereitstellbar sind.

Gemäß einer weiteren bevorzugten Ausführungsform der vorliegenden Erfindung weist die Schweißvorrichtung eine Zuführeinrichtung zum Überführen des Schweißdrahtes, insbesondere eines ersten Schweißdrahts aus einer ersten Quelleneinrichtung und/oder eines zweiten Schweißdrahts aus einer zweiten Quelleneinrichtung, aus einer ersten Orientierung in eine zweite Orientierung auf. Der Schweißdraht ist in der ersten Orientierung der Zuführeinrichtung zuführbar und der Schweißdraht ist in der zweiten Orientierung aus der Zuführeinrichtung ausleitbar, insbesondere in Richtung des Düsenstocks leitbar. Die Zuführeinrichtung weist dabei bevorzugt eine bevorzugt kegelförmige oder geneigte Zuführfläche auf. Diese Ausführungsform ist vorteilhaft, da dadurch der Schweißdraht, insbesondere selbsttätig, in eine definiert ausgerichtete Orientierung überführbar ist. Bevorzugt weist die Zuführeinrichtung eine Öffnung, durch welche der Schweißdraht hindurchführbar ist. Bevorzugt ist der Durchmesser der Öffnung kleiner als die Summe der Durchmesser der von den Quelleneinrichtungen bereitgestellten Schweißdrähten.

Gemäß einer bevorzugten Ausführungsform der vorliegenden Erfindung ist zwischen der Zuführeinrichtung und der Stromkontaktdüse nur ein Schweißdraht anordenbar. Diese Ausführungsform ist vorteilhaft, da nur genau das Material dieses einen Schweißdrahts zum Erzeugen der Schweißnaht verwendet werden kann. Dadurch wird auf vorteilhafte Weise sichergestellt, dass die Schweißnahtqualität an der jeweiligen Stelle die richtigen Materialeigenschaften aufweist.

Die Zuführeinrichtung weist gemäß einer weiteren bevorzugten Ausführungsform der vorliegenden Erfindung zumindest ein Basisteil und ein Wechselteil auf. Das Wechselteil weist dabei bevorzugt die, insbesondere kegelförmige, Zuführfläche auf. Diese Ausführungsform ist vorteilhaft, da das Wechselteil ausgewechselt werden kann, insbesondere nach dem es verschlissen ist. Der Verschleiß kann dabei daraus resultieren, dass ein Schweißdrahtende beim Einführen in die Zuführeinrichtung an der bevorzugt kegelförmigen oder geneigten Zuführfläche entlanggleitet oder entlangschleift oder entlangkratzt.

Gemäß einer weiteren bevorzugten Ausführungsform der vorliegenden Erfindung ist eine Trenneinrichtung vorgesehen. Die Trenneinrichtung weist bevorzugt zumindest zwei oder genau zwei Bereitstelleinrichtungen auf. Bevorzugt ist über jede Bereitstelleinrichtung Strom, Gas und/oder Schweißdraht aufnehmbar. Die über die Bereitstelleinrichtungen zugeführten Schweißdrähte sind bevorzugt über eine Schweißdrahtabführeinrichtung aus der Trenneinrichtung ausleitbar. Zusätzlich oder alternativ sind die über die Bereitstelleinrichtungen zugeführten Gase über einen oder mehrere Gasauslässe aus der Trenneinrichtung ausleitbar. Die Gasauslässe sind bevorzugt mit Gaseinkoppeleinrichtungen zum erneuten Einkoppeln der Gase in den Transportpfad des Schweißdrahtes verbunden. Die Gaseinkoppeleinrichtungen sind bevorzugt Bestandteile der Ausrichteinrichtung, insbesondere des Aufnahmeanteils, oder der Zuführeinrichtung oder der Zuordeneinrichtung. Die Trenneinrichtung weist gemäß einer weiteren bevorzugten Ausführungsform der vorliegenden Erfindung mehrere Abführeinrichtungen auf. Die Anzahl der Abführeinrichtungen ist bevorzugt größer als die Anzahl der Bereitstelleinrichtungen. Diese Ausführungsform ist vorteilhaft, da das zusammen mit einem jeweiligen Schweißdraht bereitgestellte Gas vom Schweißdraht separierbar ist und somit über einen anderen Pfad, insbesondere eine andere Leitung oder Leitungsverbindung, insbesondere Rohr oder Schlauch, in Richtung Stromkontaktdüse förderbar ist. Gemäß einer weiteren bevorzugten Ausführungsform der vorliegenden Erfindung sind mehrere Quelleneinrichtungen, insbesondere mindestens zwei oder genau zwei, vorgesehen, wobei jede Quelleneinrichtung eine Stromquelle, Arbeits-Gas-Quelle und/oder Schweißdrahtquelle aufweist, wobei jede Quelleneinrichtung über eine Verbindungseinrichtung mit einer oder mindestens einer Bereitstelleinrichtung verbunden ist. Bevorzugt unterscheiden sich die von den Quelleneinrichtungen bereitgestellten Schweißdrähte, insbesondere hinsichtlich der Materialzusammensetzung und/oder einer oder mehrerer geometrischen Eigenschaft/en. Zusätzlich oder alternativ können sich die von der jeweiligen Arbeits-Gas-Quellen bereitgestellten Arbeitsgase, insbesondere hinsichtlich der Zusammensetzung und/oder der Dichte, unterscheiden. Zusätzlich oder alternativ kann die Stromstärke, welche von den unterschiedlichen Stromquellen erzeugt wird, verschieden sein. Diese Ausführungsform ist vorteilhaft, da die Schweißdrähte der unterschiedlichen Quelleneinrichtungen durch dasselbe Leitungselement leitbar sind und das dem jeweiligen Schweißdraht zugeordnete Gas bzw. Arbeitsgas über eine Leitung transportierbar oder leitbar ist, welche von der Leitung, durch die das dem anderen Schweißdraht zugeordnete Gas bzw. Arbeitsgas, führbar oder leitbar ist, verschieden ist. Somit wird eine vorteilhafte Schweißdrahtführung beider bzw. aller Schweißdrähte ermöglicht, ohne dass dadurch eine unerwünschte Vermischung der Gase bzw. Arbeitsgase erfolgt.

Weiterhin kann sich die vorliegende Erfindung auf ein Verfahren zum Betrieb einer Schweißvorrichtung beziehen, welche eine erfindungsgemäße Zuordeneinrichtung aufweist.

Es ist hierbei auch möglich, dass die erfindungsgemäße Vorrichtung einen Bestandteil einer Schweißvorrichtung ausbildet. Bevorzugt weist dieser Bestandteil zumindest die nachfolgend genannten Einrichtungen und die zwischen diesen Einrichtungen bestehenden Verbindungen auf: Zuführeinrichtung, Trenneinrichtung und Leitungselement. Bevorzugt verbindet hierbei das Leitungselement die Trenneinrichtung und die Zuführeinrichtung. In Arbeitsrichtung (Zuführrichtung des Schweißdrahts von der Quelleneinrichtung zur Schweißkontaktdüse) ist zunächst die Trenneinrichtung angeordnet, daran schließt sich das Leitungselement an und daran schließt sich die Zuführeinrichtung an.

Weiterhin kann jede hierin offenbarte Schweißvorrichtung und Kombinationen davon mit einem Roboterarm, insbesondere einem Mehrachsrobotorarm, insbesondere ein 4 oder mehr als 4 oder genau 4-Achsroboterarm oder ein 5 oder mehr als 5 oder genau 5-Achsroboterarm oder ein 6 oder mehr als 6 oder genau 6-Achsroboterarm oder ein 7 oder mehr als 7 oder genau 7-Achsroboterarm oder ein 15 oder mehr als 15 oder genau 15-Achsroboterarm, ausgeführt sein.

Somit kann die vorliegende Offenbarung ebenfalls einen Mehrachsroboterarm aufweisen. Der Mehrachsroboterarm weist dabei mindestens eine im Gesamtoffenbarungsgehalt dieser Schutzrechtsschrift offenbarten Schweißvorrichtung auf. Bevorzugt verläuft zumindest ein Anteil der Schweißvorrichtung, insbesondere die Zuführeinrichtung und/oder ein Teil des Leitungselements, insbesondere die Zuordeneinrichtung, abschnittsweise in einer Hohlwelle des Mehrachsroboterarms oder des Orbitalschweißroboters.

Weiterhin kann sich die vorliegende Erfindung auf ein Verfahren zum Betrieb einer Schweißvorrichtung nach einem der Ansprüche 1-11 oder zum Betrieb eines Mehrachsroboterarms nach Anspruch 12 oder zum Betrieb eines Orbitalschweißroboters gemäß Anspruch 16 beziehen. Das Verfahren umfasst dabei bevorzugt mindestens die Schritte:
Zuführen eines ersten Schweißdrahts in Arbeitsrichtung und eines ersten Arbeitsgases von einer ersten Quelleneinrichtung zu einer Stromkontaktdüse; Bewegen des Schweißdrahts entgegen der Arbeitsrichtung zum Freigeben eines Schweißdrahtpfades, insbesondere in einem Bereich zwischen der Zuführeinrichtung und der Stromkontaktdüse; Zuführen eines zweiten Schweißdrahtes in Arbeitsrichtung und eines zweiten Arbeitsgases von einer zweiten Quelleneinrichtung zur Stromkontaktdüse über denselben Schweißdrahtpfad, insbesondere in einem Bereich zwischen der Zuführeinrichtung und der Stromkontaktdüse; wobei der erste Schweißdraht und der zweite Schweißdraht auf getrennten Schweißdrahtpfaden von den Quelleneinrichtungen zur Zuführeinrichtung gefördert werden.

Gemäß einer weiteren bevorzugten Ausführungsform der vorliegenden Erfindung wird das jeweils zugeführte Arbeitsgas von der jeweiligen Quelleneinrichtung zusammen mit dem jeweiligen Schweißdraht über jeweils eine Verbindungseinrichtung zu einer Trenneinrichtung geführt. Bevorzugt wird stets oder zeitlich überwiegend nur von einer oder genau einer Quelleneinrichtung Arbeitsgas und Schweißdraht zur Trenneinrichtung zugeführt. Die Trenneinrichtung leitet das Arbeitsgas bevorzugt in eine Gasabführeinrichtung, insbesondere in eine Gasleitung, und den Schweißdraht auf einen von der Gasleitung getrennten Schweißdrahtpfad, insbesondere Leitung, insbesondere Schlauch oder Rohr.

Die Gasleitung ist gemäß einer weiteren bevorzugten Ausführungsform der vorliegenden Erfindung mit der Zuführeinrichtung verbunden und das über die Gasleitung geführte Arbeitsgas wird durch die Zuführeinrichtung zum Umströmen des durch die Zuführeinrichtung geförderten Schweißdrahts bevorzugt in den Transportpfad des Schweißdrahts eingekoppelt. Die Trenneinrichtung und die Zuführeinrichtung stehen besonders bevorzugt über zwei oder zumindest zwei oder genau zwei Gasleitungen miteinander in einer fluidischen Verbindung. Dies ist vorteilhaft, da zur Verhinderung von Gasgemischen die Gasleitungen spülbar sind.

Somit kann die vorliegende Offenbarung ebenfalls einen Orbitalschweißroboter aufweisen. Der Orbitalschweißroboter weist dabei mindestens eine im Gesamtoffenbarungsgehalt dieser Schutzrechtsschrift offenbarte Schweißvorrichtung auf. Bevorzugt verläuft zumindest ein Anteil der jeweiligen erfindungsgemäßen Schweißvorrichtung, insbesondere die Zuführeinrichtung und/oder ein Teil des Leitungselements und/oder die Ausrichteinrichtung und/oder die Trenneinrichtung und/oder die Zuordeneinrichtung, im Bereich eines Rahmens des Orbitalschweißroboters oder im Bereich eines Führungsbandes, wobei das Führungsband bevorzugt um ein Rohr herum befestigt ist oder befestigbar ist. Das Führungsband kann hierbei ein extra Bauteil sein und ist somit nicht zwingend Teil des Orbitalschweißroboters. Bevorzugt weist der Orbitalschweißroboter eine Halteeinrichtung zum Aufnehmen, insbesondere definiert Positionieren, der Stromkontaktdüse auf. Besonders bevorzugt weist der Orbitalschweißroboter eine Bewegungseinrichtung zum Bewegen der Stromkontaktdüse gegenüber dem Rahmenteil des Orbitalschweißroboters auf, insbesondere zum oszillierenden Bewegen und/oder zum Überführen, insbesondere Schwenken, in definierte Orientierungen, insbesondere Winkel, gegenüber dem Rahmen des Orbitalschweißroboters.

Weitere Vorteile, Ziele und Eigenschaften vorliegender Erfindung werden anhand nachfolgender Beschreibung anliegender Zeichnungen erläutert, in welchen beispielhaft erfindungsgemäße Schweißvorrichtungen dargestellt sind. Elemente der erfindungsgemäßen Vorrichtungen und Verfahrensschritte, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente bzw. Schritte nicht in allen Figuren beziffert oder erläutert sein müssen. Nachfolgend wird die Erfindung rein beispielhaft anhand der beigefügten Figuren beschrieben.

Darin zeigen:
- Fig. 1a-c: Bauteile einer erfindungsgemäßen Schweißvorrichtung;
- Fig. 2, 3a-f: Darstellungen eines Beispiels einer erfindungsgemäßen Zuführeinrichtung;
- Fig. 4a-e: Darstellungen eines Beispiels einer erfindungsgemäßen Zuordeneinrichtung;
- Fig. 5a-c: Darstellungen eines Beispiels eines erfindungsgemäßen Leitungselements;
- Fig. 6, 7a-f: Darstellungen eines Beispiels einer erfindungsgemäßen Trenneinrichtung; und
- Fig. 8: eine Darstellung eines erfindungsgemäßen Mehrachsroboterarms mit einer integrierten erfindungsgemäßen Schweißvorrichtung und
- Fig. 9: eine Darstellung eines erfindungsgemäßen Orbitalschweißroboters mit einem Beispiel einer integrierten erfindungsgemäßen Schweißvorrichtung.

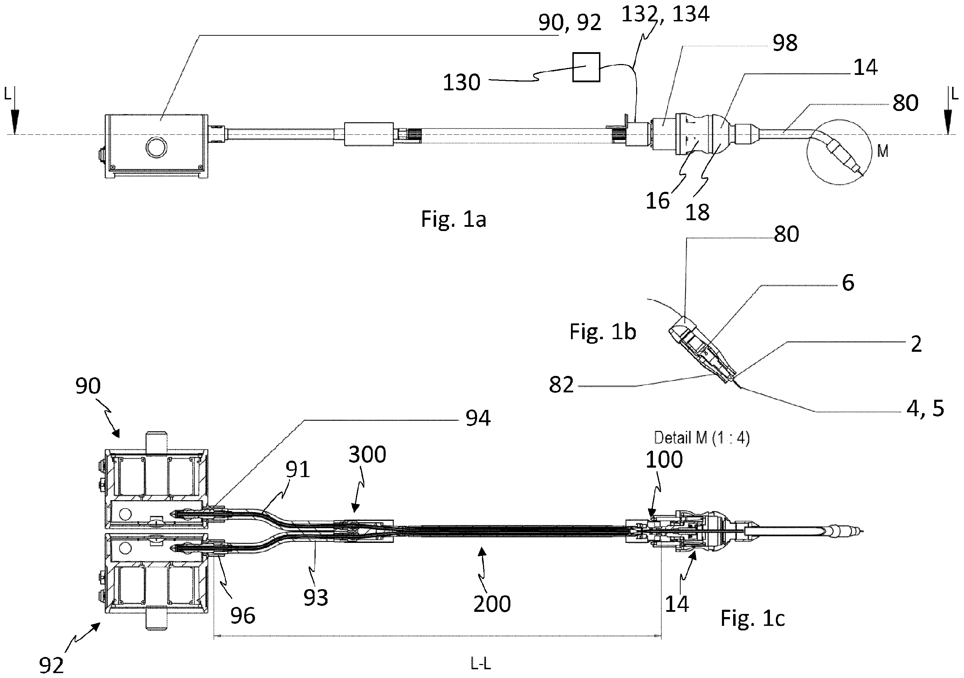

Fig. 1 zeigt eine Schweißvorrichtung 1. Diese Schweißvorrichtung weist eine Stromkontaktdüse 2 auf. Die Stromkontaktdüse 2 weist eine längliche Führungseinrichtung zum Führen eines Schweißdrahtes 4 auf. Ferner weist die Schweißvorrichtung einen Düsenstock 6 auf. Die Stromkontaktdüse 2 ist an oder in dem Düsenstock 6 angeordnet . Ferner ist eine Zuführeinrichtung 100 zum Überführen des Schweißdrahtes 4 aus einer ersten Orientierung in eine zweite Orientierung vorgesehen . Der Schweißdraht 4 ist in der ersten Orientierung der Zuführeinrichtung 100 zuführbar und ist in der zweiten Orientierung aus der Zuführeinrichtung 100 ausleitbar , insbesondere ist der Schweißdraht in Richtung des Düsenstocks 6 leitbar. Die Zuführeinrichtung 100 weist eine bevorzugt kegelförmige Zuführfläche 102 , welche bevorzugt gehärtet ist. Weiterhin ist zusätzlich ein längliches Leitungselement 200 vorgesehen, wobei durch das Leitungselement 200 mehrere Schweißdrahtseelen 8, 10 aufnehmbar sind. Über ein erstes Leitungselementende sind die Schweißdrahtseelen 8, 10 in das Leitungselement 200 einbringbar und wobei der in den Schweißdrahtseelen 8, 10 geführte Schweißdraht 4, 5 über ein zweites Leitungselementende aus dem Leitungselement 200 heraus führbar ist.

Der aus dem Leitungselement 200 über das zweite Leitungselementende heraus geführte Schweißdraht 4, 5 ist in Richtung der Zuführeinrichtung 100 leitbar, insbesondere kann dieser in der ersten Orientierung in die Zuführeinrichtung 100 eindringen.

Weiterhin kann eine Ausrichteinrichtung 14 vorgesehen sein, wobei der Düsenstock 6 zumindest mittelbar mit der Ausrichteinrichtung 14 verbunden ist. Ein Schweißdraht 4, 5 kann durch die Ausrichteinrichtung 14 hindurch in den Düsenstock 6, insbesondere die Stromkontaktdüse 2, geleitet werden. Die Ausrichteinrichtung 14 weist bevorzugt einen Aufnahmeanteil 16 und einen Abgabeanteil 18 aufweist, wobei über den Aufnahmeanteil 16 Strom und/oder Arbeits-Gas in die Ausrichteinrichtung 14 einleitbar sind und wobei der eingeleitete Strom oder das eingeleitete Arbeits-Gas über den Abgabeanteil 18 zum Düsenstock 6 leitbar ist.

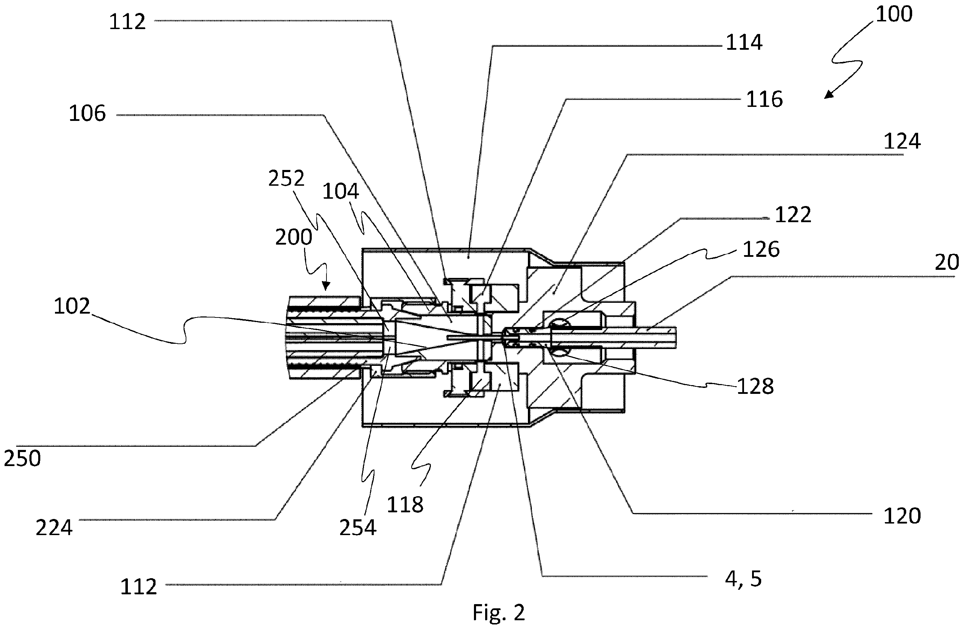

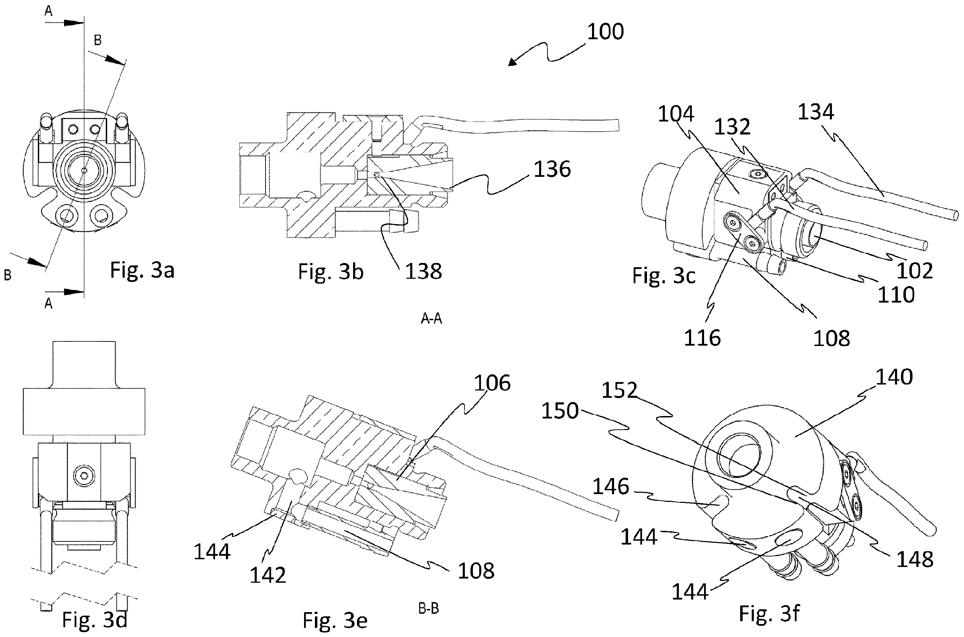

Die Fig. 2 und 3a-3f zeigen Beispiele einer Zuführeinrichtung 100. Die Zuführeinrichtung 100 gibt einen Transportpfad zum Transport eines Schweißdrahtes 4, 5, insbesondere in Richtung der Stromkontaktdüse 2, vor oder bildet einen solchen Transportpfad zumindest teilweise aus.

Bevorzugt ist eine elektrisch isolierende Hülse 114, insbesondere aus einem Polymermaterial bestehend oder ein Polymermaterial aufweisend, vorgesehen. Die Hülse 114 überlagert bevorzugt zumindest teilweise und besonders bevorzugt mehrheitlich oder vollständig die Zuführeinrichtung 100 in Umfangsrichtung. Die Hülse 114 isoliert zumindest 500V oder 1000V oder 2000V.

Weiterhin kann die Zuführeinrichtung 100 Lichtleiterköpfe 116, 118 aufweisen. Ein Lichtleiterkopf 116 ist einerseits des Transportpfades bzw. seitlich dazu beabstandet angeordnet oder anordenbar und der andere Lichtleiterkopf 118 ist andererseits des Transportpfades bzw. gegenüber von dem ersten Lichtleiterkopf 116 angeordnet oder anordenbar. Der erste Lichtleiterkopf 116 und der zweite Lichtleiterkopf 118 sind dabei kommunizierend zueinander ausgerichtet. Dies ist vorteilhaft, da so z.B. die Präsenz eines Schweißdrahts 4, 5 festgestellt werden kann. Bevorzugt sind die Lichtleiterköpfe 116, 118 mit einem Sensor oder einer Sensoreinrichtung 130 über Lichtleiter 132, 134 verbunden. Bevorzugt wird ein Sensorarray ausgebildet oder es ist ein Sensorarray vorgesehen. Ein Sensorarray ist vorteilhaft, da es zusätzlich zur Präsenzbestimmung erlaubt die Vorschubgeschwindigkeit des neu in die Zuführeinrichtung 100 eingebrachten Schweißdrahtes zu bestimmen. Weiterhin oder alternativ kann es möglich sein, dass durch die optische Analyse des Schweißdrahtes mittels der Sensoreinrichtung 130 Oberflächeneigenschaften, insbesondere Reinheit, Defekte und/oder Verunreinigungen, erkannt werden. Die Lichtleiterköpfe 116, 118 sind bevorzugt in einem Winkel von 90° zur Drahtführung oder zum Transportpfad angeordnet oder ausgerichtet. Ein Lichtleiterkopf 116 dient dabei als Sender und ein Lichtleiterkopf 118 dient als Empfänger. Die Sensoreinrichtung 130 koppelt somit bevorzugt definierte Lichtwellen in den ersten Lichtleiterkopf 116 ein und der andere Lichtleiterkopf 118 nimmt diese oder Teile dieser emittierten Lichtwellen auf und leitet sie an die Sensoreinrichtung 130, insbesondere zur Analyse, weiter.

Zusätzlich oder alternativ kann die Zuführeinrichtung 100 zum Überführen des Schweißdrahtes 4 aus einer ersten Orientierung in eine zweite Orientierung dienen. Der Schweißdraht 4, 5 wird dabei der Zuführeinrichtung 100 in der ersten Orientierung zugeführt und in der zweiten Orientierung aus der Zuführeinrichtung 100 ausgeleitet, insbesondere in Richtung des Düsenstocks 6. Die Zuführeinrichtung 100 weist bevorzugt eine kegelförmige Zuführfläche 102 auf. Die Zuführfläche 102 kann Teil eines Wechselteils 106 sein. Das Wechselteil 106 kann z.B. formschlüssig oder kraftschlüssig oder stoffschlüssig mit einem Basisteil 104 der Zuführeinrichtung 100, insbesondere lösbar, verbunden sein. Das Wechselteil 106 kann ein anderes Material aufweisen oder aus einem anderen Material bestehen als das Basisteil 104. Das andere Material ist bevorzugt Stahl, insbesondere gehärteter Stahl, oder ein Keramikmaterial. Die Zuführfläche 102 bildet einen Eintrittbereich 136 und einen Austrittbereich 138 auf. Der Austrittbereich 138 ist dabei in Arbeitsrichtung näher zur Stromkontaktdüse 2 oder zum Schweißort ausgerichtet als der Eintrittbereich 136. Der kleinste Durchmesser des Eintrittbereichs 136 ist bevorzugt zumindest um den Faktor 1,3 oder 1,5 oder 1,8 oder 2 oder 2,5 oder 3 oder 4 oder 5 größer als der kleinste Durchmesser des Austrittbereichs 138.

Zusätzlich oder alternativ weist die Zuführeinrichtung 100 Arbeitsgasanschlüsse, insbesondere eine erste Gaseinkoppeleinrichtung 108 und eine zweite Gaseinkoppeleinrichtung 110, auf. Die erste Gaseinkoppeleinrichtung 108 dient zum Anschließen an die erste Gasabführeinrichtung 226, welche Arbeitsgas über den ersten Gasauslass 320 der Trenneinrichtung 300 erhält. Die zweite Gaseinkoppeleinrichtung 110 dient zum Anschließen an die zweite Gasabführeinrichtung 228, welche Arbeitsgas über den zweiten Gasauslass 322 der Trenneinrichtung 300 erhält.

Die Arbeitsgasanschlüsse 108, 110 sind bevorzugt an einem Masseelement 140 ausgebildet oder angeordnet. Das Masseelement 140 bildet bevorzugt mindesten 10% und besonders bevorzugt mindestens 20% oder mindestens 30% oder mindestens 40% oder mindestens 50% oder mindestens 60% oder mindestens 70% der Masse der Zuführeinrichtung 100 aus. Das Masseelement 140 bildet dabei bevorzugt ein ringartiges Element aus, wobei sich die Dicke des Rings in axialer Richtung bzw. in Transportrichtung des Schweißdrahtes innerhalb der Zuführeinrichtung 100 erstreckt. Der Ring kann eine Dicke von mehr als 5mm oder mehr als 8mm oder mehr als 10mm oder mehr als 12mm aufweisen. Besonders bevorzugt verläuft der Schweißdrahttransportpfad durch das radiale Zentrum des Rings. Der Ring 140 weist bevorzugt zwei in Richtung des Zentrums des Rings orientierte Bohrungen 142, 144 auf. Die Bohrungen 142, 144 verlaufen dabei ausgehend von einer äußeren Umfangsfläche des Rings 140 in Richtung Zentrum des Rings 140. Die erste Gaseinkoppeleinrichtung 108 ist bevorzugt gegenüber der ersten Bohrung 142 geneigt, insbesondere in einem Winkel von 90°, orientiert. Die erste Gaseinkoppeleinrichtung 108 ist mit der ersten Bohrung 142 kommunizierend (zum Arbeitsgasaustausch) verbunden. Weiterhin kann der Ring 140 ausgehend von seiner Umfangsfläche, insbesondere in radialer Richtung erstreckend, eine oder mehrere Ausnehmungen 146, 148 aufweisen. Die Ausnehmungen 146, 148 erstrecken sich bevorzugt über die gesamte Dicke des Rings 140. Bevorzugt erstreckt sich die Ausnehmung 146 oder erstecken sich die Ausnehmungen 146, 148 in radialer Richtung oder in Richtung Zentrum des Rings mindestens oder bis zu 3mm oder mindestens oder bis zu 4mm oder mindestens oder bis zu 5mm oder mindestens oder bis zu 6mm oder mindestens oder bis zu 7mm oder mindestens oder bis zu 8mm oder mindestens oder bis zu 9mm oder mindestens oder bis zu 10mm oder mindestens oder bis zu 12mm oder mindestens oder bis zu 15mm. Die Öffnungsweite der Ausnehmung 146, 148 beträgt bevorzugt mindestens oder bis zu 1mm oder mindestens oder bis zu 1,5mm oder mindestens oder bis zu 2mm oder mindestens oder bis zu 2,5mm oder mindestens oder bis zu 3mm oder bis zu 3,5mm oder mindestens oder bis zu 4mm oder mindestens oder bis zu 4,5mm oder mindestens oder bis zu 5mm. Die Öffnungsweite beschreibt hierbei den Abstand zwischen den ebenen Flächenanteilen (150, 152) einer Ausnehmung 146, 148 zueinander.

Die zweite Gaseinkoppeleinrichtung 110 ist bevorzugt gegenüber der zweiten Bohrung (nicht gezeigt) geneigt, insbesondere in einem Winkel von 90°, orientiert. Die zweite Gaseinkoppeleinrichtung 110 ist mit der zweiten Bohrung kommunizierend (zum Arbeitsgasaustausch) verbunden.

Bevorzugt weist die Zuführeinrichtung 100 eine Zuführfläche 102 und Lichtleiterköpfe 116, 118 auf, die Lichtleiterköpfe 116 sind bevorzugt näher zur Stromkontaktdüse 2 oder zum Schweißort ausgerichtet als die Zuführfläche 102.

Bevorzugt weist die Zuführeinrichtung 100 eine Zuführfläche 102 und ein Masseelement 140 auf, das Masseelement ist bevorzugt näher zur Stromkontaktdüse 2 oder zum Schweißort ausgerichtet als die Zuführfläche 102.

Bevorzugt weist die Zuführeinrichtung 100 einen Lichtleiterkopf oder mehrere Lichtleiterköpfe 116, 118 und ein Masseelement 140 auf, das Masseelement 140 ist bevorzugt näher zur Stromkontaktdüse 2 oder zum Schweißort ausgerichtet als der Lichtleiterkopf oder die Lichtleiterköpfe 116, 118.

Die Zuführeinrichtung besteht bevorzugt mehrheitlich (massemäßig) oder vollständig aus einem metallischen Werkstoff oder einer Werkstoffkombination, insbesondere aus Kupfer oder Messing.

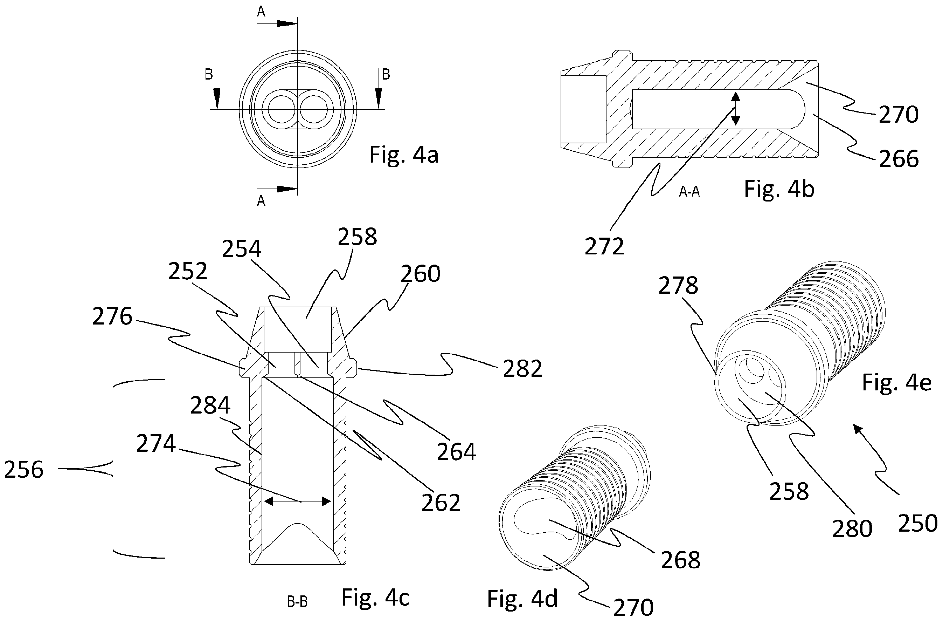

Fig. 4 zeigt eine Zuordeneinrichtung 250 zum Aufnehmen und definierten Ausrichten von länglichen Führungseinrichtungen, insbesondere Schweißdrahtseelen 8, 10. Die Zuordeneinrichtung 250 weist dabei bevorzugt zumindest eine Eingangsöffnung 266 und eine Ausgangsöffnung 278 auf. Bevorzugt ist die Eintrittsöffnung 266 in axialer Richtung von der Austrittsöffnung 278 beabstandet. Zwischen der Eintrittsöffnung 266 und der Austrittsöffnung 278 ist besonders bevorzugt eine Wandung 280 angeordnet oder ausgebildet, wobei die Wandung 280 zwei oder mindestens zwei oder genau zwei Durchgangsöffnungen 252, 254 aufweist, wobei die Durchgangsöffnungen 252, 254 bevorzugt den gleichen Durchmesser aufweisen, bevorzugt weisen die Durchgangsöffnungen 252, 254 in Richtung der Eintrittsöffnung 266 jeweils Zuführschrägen 262, 264 auf. Zwischen den Durchgangsöffnungen 252, 254 und der Austrittsöffnung 278 ist bevorzugt ein Auslassraum 258 ausgebildet. Zwischen den Durchgangsöffnungen 252, 254 und der Eintrittsöffnungsfläche 270 ist bevorzugt ein Innenraum 268 ausgebildet. Bevorzugt erstreckt sich der Innenraum 268 in axialer Richtung weiter als der Auslassraum 258. Bevorzugt weist der Auslassraum 258 eine kontinuierliche, insbesondere zylinderförmige, Gestalt auf und/oder der Innenraum 268 weist bevorzugt abschnittsweise oder nur abschnittsweise, insbesondere mehrheitlich (längenmäßig), eine kontinuierliche Form auf. Bevorzugt erstreckt sich der Innenraum 268 in Breitenrichtung 274 weiter als in Höhenrichtung 272. Bevorzugt erstreckt sich der Innenraum 268 in Breitenrichtung 274 zumindest um den Faktor 1,3 oder 1,5 oder 1,7 oder 1,9 oder 2 oder 2,5 weiter als in Höhenrichtung 272. Bevorzugt bildet der Innenraum 268 zumindest abschnittsweise und bevorzugt mehrheitlich oder vollständig eine Querschnittsfläche (orthogonal zur axialen Richtung) aus, welche von einer runden Form abweicht. Bevorzugt bildet der Auslassraum 258 zumindest abschnittsweise und bevorzugt mehrheitlich oder vollständig eine Querschnittsfläche (orthogonal zur axialen Richtung) aus, die bevorzugt einer Kreisform entspricht. Weiterhin kann die Zuordeneinrichtung aus Metall, insbesondere Messing oder Kupfer oder Stahl oder Aluminium oder einem Edelmetall bestehen. Alternativ kann die Zuordeneinrichtung aus einem Keramikmaterial, einem Verbundwerkstoff oder einem Polymermaterial oder einer Materialkombination aus den genannten Materialen bestehen.

Weiterhin kann die Zuordeneinrichtung 250 einen umlaufenden Kragen 276 aufweisen. Der Kragen 276 erstreckt sich dabei bevorzugt entlang der äußeren Oberfläche der Zuordeneinrichtung 250 bzw. bildet diese äußere Oberfläche 282 mit aus. Der Innenraum 268 wird somit von der inneren Oberfläche 284 begrenzt. Bevorzugt überlagert der Kragen 276 in radialer Richtung die Öffnungen 252, 254. Es ist jedoch alternativ möglich, dass der Kragen 276 nicht vorhanden ist oder in radialer Richtung nicht oder nur teilweise überlagert. Die äußere Oberfläche 282 ist in dem Bereich, in dem sie den Auslassraum 258 überlagert bevorzugt konusförmig ausgebildet. Die äußere Oberfläche 282 ist in dem Bereich, in dem sie den Innenraum 268 überlagert bevorzugt zylinderförmig ausgebildet, wobei es möglich ist, dass die äußere Oberfläche 282 in diesem Bereich bevorzugt abschnittsweise ein Gewinde oder eine Riffelung aufweist.

Die Zuordnungseinrichtung 250 ist vorteilhaft, da sie "blind" eine definierte Zuordnung und Ausrichtung von Führungseinrichtungen 10, 11 bewirkt.

Die Zuordeneinrichtung 250 kann besonders bevorzugt Teil eines Leitungselements 200, insbesondere zum Aufnehmen von Schweißdrahtseelen 10, 11 zum Führen von Schweißdraht 4, 5 sein.

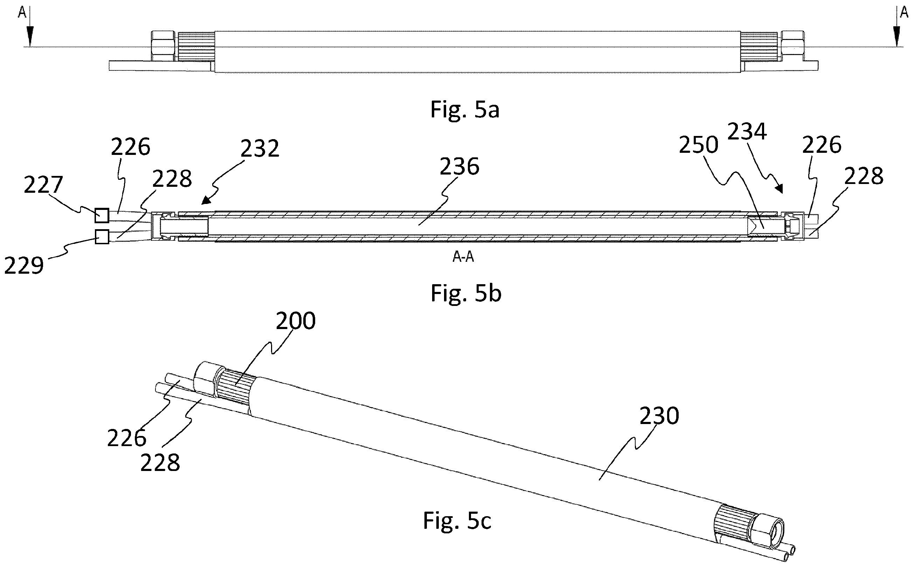

Fig. 5a-c zeigen Beispiele von Leitungselementen 200.

Das Leitungselement 200 weist bevorzugt einen Leitungsraum 236 zum Aufnehmen von mehreren, insbesondere zwei oder genau zwei oder mindestens zwei, Schweißdrahtseelen 8, 10 auf.

Das Leitungselement 200 weist bevorzugt ein erstes Ende 232 auf, das bevorzugt mit einer Trenneinrichtung 300 verbindbar ist. Zusätzlich oder alternativ weist das Leitungselement 200 ein zweites Ende 234 auf, das bevorzugt mit einer Zuführeinrichtung 100 verbindbar ist.

An dem Leitungselement 200 kann z.B. mittels eines bevorzugt isolierenden Mantels oder Schlauchs oder Bands eine Gasführeinrichtung 226 oder mehrere Gasführeinrichtungen 226, 228 angeordnet sein. Bevorzugt weist die erste Gasführeinrichtung 226 einen Kopplungsanschluss 227 auf, wobei der Kopplungsanschluss 227 besonders bevorzugt mit einem Rückschlagventil ausgestattet ist bzw. ein Rückschlagventil aufweist. Bevorzugt weist die zweite Gasführeinrichtung 228 einen Kopplungsanschluss 229 auf, wobei der Kopplungsanschluss 229 besonders bevorzugt mit einem Rückschlagventil ausgestattet ist bzw. ein Rückschlagventil aufweist. Es ist alternativ auch möglich, dass (je Gasführeinrichtung 226, 228) das Rückschlagventil auch dann vorgesehen ist, wenn die Gasführeinrichtung keinen Kopplungsanschluss aufweist, sondern als weitergehende Leitung, insbesondere Rohr oder Schlauch, ausgebildet ist. Alternativ ist es ebenfalls möglich, dass die jeweilige Gasführeinrichtung jeweils mindestens oder genau einen Kopplungsanschluss und ein Rückschlagventil aufweist, wobei das Rückschlagventil und der Kopplungsanschluss gentrennt voneinander ausgebildet sein können.

Bevorzugt sind von dem Leitungselement 200 Schweißdrahtseelen 8, 10 aufnehmbar, die jeweils bereits abschnittsweise von einer Trenneinrichtung 300 umschlossen sind. Von den Quelleneinrichtungen 90, 92 sind somit Schweißdrähte 4, 5 durch die Schweißdrahtseelen 8, 10 bis zu dem zweiten Ende 234 des Leitungselements 200 förderbar. Einer der geförderten Schweißdrähte 4 oder 5 kann dann der Zuführeinrichtung 100 zugeführt werden. Diese führt den Schweißdraht dann definiert in eine weitere bzw. dritte Schweißdrahtseele 20 ein.

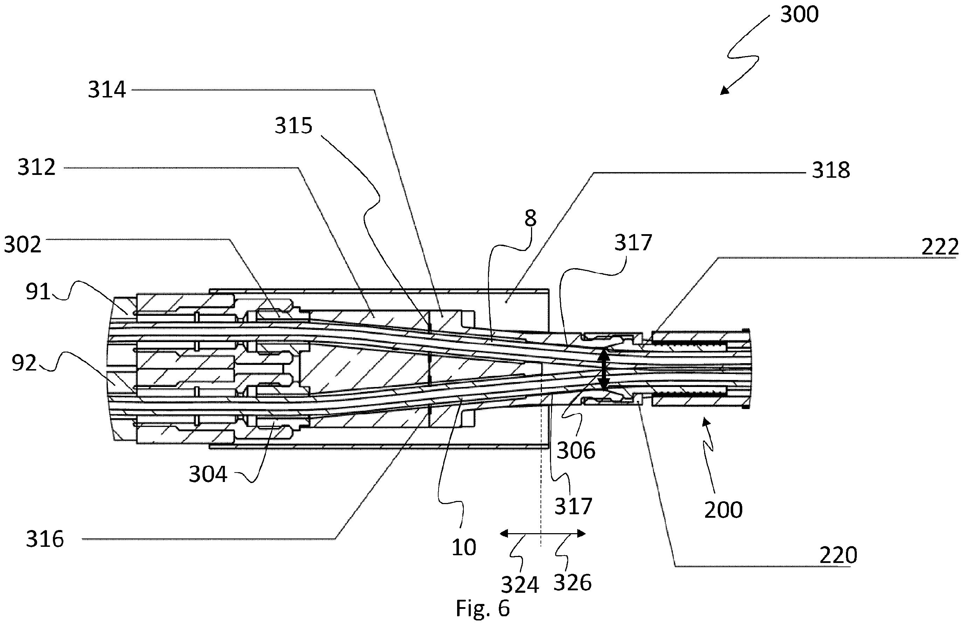

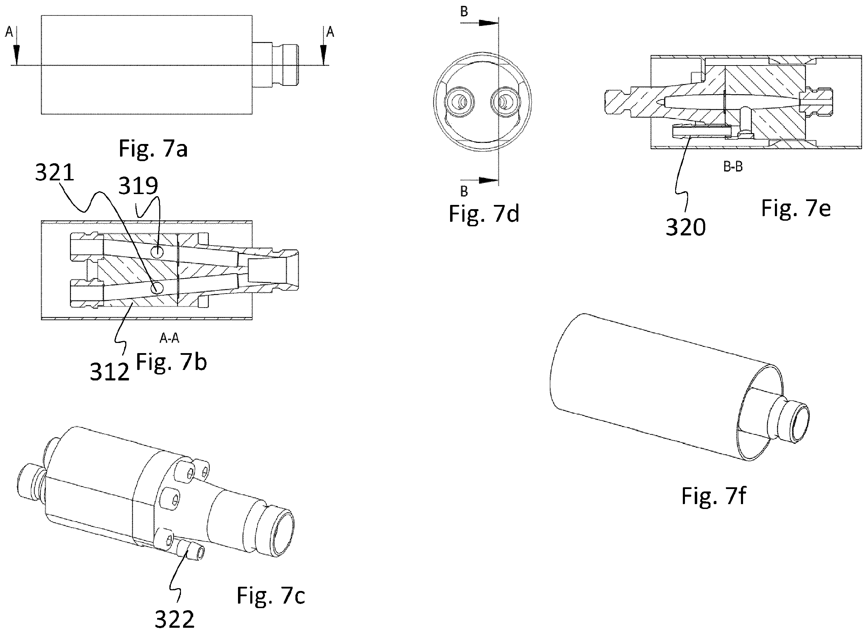

Fig. 6 und die Fig. 7a bis f zeigen ein Beispiel einer Trenneinrichtung 300.

Die Trenneinrichtung 300 weist zumindest zwei Bereitstelleinrichtung 302, 304 auf. Über jede dieser Bereitstelleinrichtungen 302, 304 Strom, Gas und Schweißdraht aufnehmbar sind. Bevorzugt unterscheiden sich die von den unterschiedlichen Quelleneinrichtungen 90, 92 an die jeweiligen Bereitstelleinrichtungen 302, 304 übermittelten Medien voneinander. Bevorzugt stellt die erste Quelleneinrichtung 90 einen ersten Schweißdraht und ein erstes Arbeitsgas und einen ersten Strom bereit. Bevorzugt stellt die zweite Quelleneinrichtung 92 einen zweiten Schweißdraht und ein zweites Arbeitsgas und einen zweiten Strom bereit. Bevorzugt unterscheidet sich der erste Schweißdraht vom zweiten Schweißdraht, insbesondere hinsichtlich des Materials und/oder der Dicke. Zusätzlich oder alternativ unterscheidet sich das erste Gas vom zweiten Gas, insbesondere hinsichtlich der Zusammensetzung und/oder der Dichte und/oder der Temperatur und/oder dem Druck. Zusätzlich oder alternativ unterscheidet sich der erste Strom vom zweiten Strom, insbesondere hinsichtlich der Stromstärke.

Die über die Bereitstelleinrichtungen 302, 304 zugeführten Schweißdrähte 4, 5 werden bevorzugt in Schweißdrahtseelen 8, 10 geführt und über eine Schweißdrahtabführeinrichtung 306, insbesondere einen gemeinsamen Leitungsabschnitt, aus der Trenneinrichtung 300 ausgeleitet.

Die über die Bereitstelleinrichtungen 302, 304 zugeführten Gase sind über einen oder mehrere Gasauslässe 320, 322 aus der Trenneinrichtung 300 ausleitbar. Die Trenneinrichtung 300 weist bevorzugt mehrere Abführeinrichtungen 306, 320, 322 auf, wobei die Anzahl der Abführeinrichtungen 306, 320, 322 größer ist als die Anzahl der Bereitstelleinrichtungen 302, 304.

Die Trenneinrichtung 300 bildet bevorzugt ein Eingangsteil 312 und ein Ausgangsteil 314 aus oder weist diese Teile auf. Das Eingangsteil 312 ist hierbei mit der ersten Verbindungseinrichtung 91 und mit der zweiten Verbindungseinrichtung 93 verbindbar und das Ausgangsteil 314 ist bevorzugt mit dem Leitungselement 200 koppelbar. Das Eingangsteil 312 weist ferner Gasauslässe 320, 322 auf.

Bevorzugt ist zumindest ein Dichtungselement 315/316 oder 317 vorgesehen. Das Dichtungselement 315 kann ebenso, wie das Dichtungselement 316, als Ringdichtung oder Scheibendichtung ausgebildet sein. Bevorzugt wirken die Dichtungselemente 315, 316 kraftschlüssig auf die Außenoberflächen der Schweißdrahtseelen 8, 10 ein und bewirken dadurch eine Dichtwirkung, d.h. verhindern einen Gasfluss in das Ausgangsteil 314. Zusätzlich oder alternativ kann das Ausgangsteil 314, insbesondere im Bereich des Übergangs von der getrennten Schweißdrahtseelenführung (324) in die gemeinsame Schweißdrahtseelenführung (326) eine Spaltdichtung 317 ausbilden.

Das Bezugszeichen 318 kennzeichnet eine Hülse, insbesondere zur elektrischen Isolierung. Die Hülse 318 isoliert bevorzugt zumindest 500V und besonders bevorzugt zumindest 1000V oder 2000V.

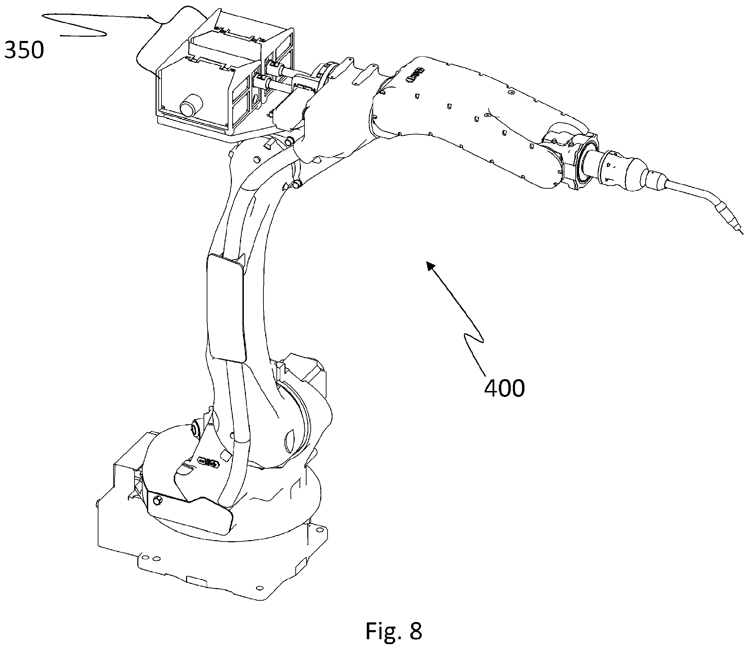

Fig. 8 zeigt eine erfindungsgemäße Schweißvorrichtung, welche mit einem Schweißroboterarm 400 zusammenwirkt oder einen solchen aufweist.

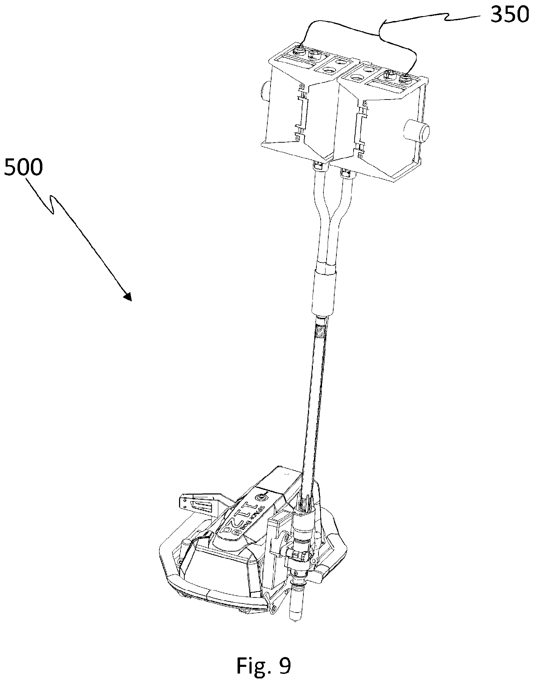

Fig. 9 zeigt eine erfindungsgemäße Schweißvorrichtung, welche mit einem Oribitalschweißroboter zusammenwirkt oder einen solchen aufweist.

In beiden Figuren ist eine Druckluftbereitstelleinrichtung 350 gekennzeichnet. Eine solche Druckluftbereitstellung kann bevorzugt Teil der Schweißvorrichtung sein und zum Reinigen der Schweißvorrichtung dienen. Die Druckluft wird hierbei über denselben Pfad bzw. dieselbe Leitung/en geführt, über die das Gas führbar ist. Somit wird die Druckluft z.B. über die Leitungen 226 und 228 geführt und somit bevorzugt zumindest abschnittsweise getrennt vom Schweißdraht.

### Bezugszeichenliste

- 1: Schweißvorrichtung
- 2: Stromkontaktdüse
- 4: erster Schweißdraht
- 5: zweiter Schweißdraht
- 6: Düsenstock
- 8: erste Schweißdrahtseele
- 9: Ende der ersten Schweißdrahtseele
- 10: zweite Schweißdrahtseele
- 11: Ende der zweiten Schweißdrahtseele
- 14: Ausrichteinrichtung
- 16: Aufnahmeanteil
- 18: Abgabeanteil
- 20: dritte Drahtseele oder dritte Schweißdrahtseele
- 80: Brenner / Brennerhals
- 82: Gasdüse
- 90: erste Quelleneinrichtung
- 91: erste Verbindungseinrichtung
- 92: zweite Quelleneinrichtung
- 93: zweite Verbindungseinrichtung
- 94: erste Quelleneinrichtung-Verbindungseinrichtung-Kopplungsstelle
- 96: zweite Quelleneinrichtung-Verbindungseinrichtung-Kopplungsstelle
- 98: TCP Adapter

- 100: Zuführeinrichtung
- 102: Zuführfläche
- 104: Basisteil
- 106: Wechselteil
- 108: erste Gaseinkoppeleinrichtung
- 110: zweite Gaseinkoppeleinrichtung
- 112: Halteeinrichtung / Halteplatte / Winkel
- 114: Isolierhülse (vorne)
- 116: erster Lichtleiterkopf
- 118: zweiter Lichtleiterkopf
- 120: Drahteinlauf
- 122: Dichtungsmittel (z.B. O-Ring)
- 124: Aufsatz / Verdickung
- 126: erster Arbeitsgaseinlass
- 128: zweiter Arbeitsgaseinlass
- 130: Sensor
- 132: erster Lichtleiter
- 134: zweiter Lichtleiter
- 136: Eintrittbereich
- 138: Austrittbereich
- 140: Masseelement / Ring
- 142: Bohrung
- 144: Löteinsatz
- 146: erste Ausnehmung
- 148: zweite Ausnehmung
- 150: erster ebener Flächenanteil
- 152: zweiter ebener Flächenanteil

- 200: Leitungselement
- 202: erstes Leitungselementende
- 204: zweites Leitungselementende
- 206: Anschlag
- 220: Fixierelement / Überwurfmutter
- 222: Übergabekonus (hinten)
- 224: weiteres Fixierelement / Überwurfmutter
- 226: erste Gasabführeinrichtung
- 227: erste Kopplungsanschluss bevorzugt mit Rückschlagventil ausgestattet
- 228: zweite Gasabführeinrichtung
- 229: zweiter Kopplungsanschluss bevorzugt mit Rückschlagventil ausgestattet
- 230: elektrische Isolierung (>500V)
- 232: Trenneinrichtungseitiges Ende
- 234: Zuführeinrichtungseitiges Ende
- 236: Leitungsraum zum Aufnehmen mehrerer Schweißdrahtseelen

- 250: Zuordeneinrichtung
- 252: erste axiale Öffnung
- 254: zweite axiale Öffnung
- 256: Zuordenanteil
- 258: Auslassraum
- 260: Äußere Koppelfläche, insbesondere konisch
- 262: erste Zuführschräge zur ersten Öffnung / Bohrung
- 264: zweite Zuführschräge zur zweiten Öffnung / Bohrung
- 266: Eintrittsöffnung
- 268: Innenraum zwischen Zuführschrägen und Eintrittsöffnung
- 270: gegenüber der Längserstreckungsrichtung geneigte Eintrittsöffnungsfläche
- 272: Höhe des Innenraums
- 274: Breite des Innenraums
- 276: Kragen
- 278: Austrittsöffnung
- 280: Wandung
- 282: äußere Oberfläche
- 284: innere Oberfläche

- 300: Trenneinrichtung
- 302: erste Bereitstelleinrichtung / Gewindestutzen
- 304: zweite Bereitstelleinrichtung / Gewindestutzen
- 306: Schweißdrahtabführeinrichtung / Leitung
- 312: Eingangsteil / Y-Element Hinterteil
- 314: Ausgangsteil / Y-Element Vorderteil
- 315: erstes Dichtungselement / Dichtscheibe
- 316: zweites Dichtungselement /Dichtscheibe
- 317: Spaltdichtung
- 318: Hülse / Isolierhülse
- 319: Bohrung zum ersten Gasauslass
- 320: erster Gasauslass
- 321: Bohrung zum zweiten Gasauslass
- 322: zweiter Gasauslass
- 324: getrennte Schweißdrahtseelenführung
- 326: gemeinsame Schweißdrahtseelenführung
- 350: Druckluftanschluss bzw. Druckluftbereitstelleinrichtung
- 400: Mehrachsroboterarm

- 500: Orbitalschweißroboters

## Patentansprüche

1. Schweißvorrichtung (1), mindestens aufweisend eine Stromkontaktdüse (2), wobei die Stromkontaktdüse (2) eine längliche Führungseinrichtung zum Führen eines Schweißdrahtes (4) aufweist, einen Düsenstock (6), wobei die Stromkontaktdüse (2) an oder in dem Düsenstock (6) angeordnet ist, eine Zuführeinrichtung (100) zum Überführen des Schweißdrahtes (4) aus einer ersten Orientierung in eine zweite Orientierung, wobei der Schweißdraht (4) in der ersten Orientierung der Zuführeinrichtung (100) zuführbar ist und in der zweiten Orientierung aus der Zuführeinrichtung (100) ausleitbar ist, insbesondere in Richtung des Düsenstocks (6) leitbar ist, wobei die Zuführeinrichtung (100) eine bevorzugt kegelförmige Zuführfläche (102) aufweist, und ein längliches Leitungselement (200), **dadurch gekennzeichnet, dass** durch das Leitungselement (200) mehrere Schweißdrahtseelen (8, 10) aufnehmbar sind, wobei über ein erstes Leitungselementende die Schweißdrahtseelen (8, 10) in das Leitungselement (200) einbringbar sind und wobei der in den Schweißdrahtseelen (8, 10) geführte Schweißdraht (4) über ein zweites Leitungselementende aus dem Leitungselement (200) heraus führbar ist,
wobei der aus dem Leitungselement (200) über das zweite Leitungselementende heraus geführte Schweißdraht (4) in Richtung der Zuführeinrichtung (100) leitbar ist, insbesondere in der ersten Orientierung in die Zuführeinrichtung (100) eindringt.

2. Schweißvorrichtung nach Anspruch 1, **dadurch gekennzeichnet, dass** zwischen der Zuführeinrichtung (100) und der Stromkontaktdüse (2) nur ein Schweißdraht (4) anordenbar ist.

3. Schweißvorrichtung nach einem der vorangegangenen Ansprüche, **dadurch gekennzeichnet, dass** mindestens ein Anschlag (206) zur Begrenzung der Eindringtiefe der Schweißdrahtseelen (8, 10) in das Leitungselement (200) vorgesehen ist, wobei der Anschlag (206) Teil einer Zuordeneinrichtung (250) ist, wobei die Zuordeneinrichtung (250) mindestens zwei axiale Öffnungen (252, 254) ausbildet, wobei das Ende (9) einer Schweißdrahtseele (8) definiert vor einer Öffnung (252) anordenbar ist, wobei der durch diese Schweißdrahtseele (8) geführte Schweißdraht (4) durch die Öffnung (252) leitbar ist und das Ende (11) einer weiteren Schweißdrahtseele (10) definiert vor einer anderen Öffnung (254) anordenbar ist, wobei der durch die weitere Schweißdrahtseele (10) geleitete weitere Schweißdraht (5) durch die weitere Öffnung (254) leitbar ist, wobei die Zuordeneinrichtung (250) einen Zuordenanteil (256) ausbildet, durch den die Zuordnung der Schweißdrahtseele (8) zur Öffnung (252) und der weiteren Schweißdrahtseele (10) zur anderen Öffnung (254) bewirkbar ist.

4. Schweißvorrichtung nach einem der vorangegangenen Ansprüche, **dadurch gekennzeichnet, dass** eine Ausrichteinrichtung (14) vorgesehen ist, wobei der Düsenstock (6) zumindest mittelbar mit der Ausrichteinrichtung (14) verbunden ist, wobei ein Schweißdraht (4, 5) durch die Ausrichteinrichtung (14) hindurch in den Düsenstock (6), insbesondere die Stromkontaktdüse (2), leitbar ist, wobei die Ausrichteinrichtung (14) einen Aufnahmeanteil (16) und einen Abgabeanteil (18) aufweist, wobei über den Aufnahmeanteil (16) Strom und/oder Arbeits-Gas in die Ausrichteinrichtung (14) einleitbar ist/sind und wobei der eingeleitete Strom oder das eingeleitete Arbeits-Gas über den Abgabeanteil (18) zum Düsenstock (6) leitbar ist.

5. Schweißvorrichtung nach Anspruch 4, **dadurch gekennzeichnet, dass** der Abgabeanteil (18) gegenüber dem Aufnahmeanteil (16) rotierbar ist.

6. Schweißvorrichtung nach einem der vorangegangenen Ansprüche, **dadurch gekennzeichnet, dass** die Zuführeinrichtung (100) zumindest ein Basisteil (104) und ein Wechselteil (106) aufweist, wobei das Wechselteil (106) die kegelförmige Zuführfläche (102) aufweist.

7. Schweißvorrichtung nach einem der vorangegangenen Ansprüche, **dadurch gekennzeichnet, dass** eine Trenneinrichtung (300) vorgesehen ist, wobei die Trenneinrichtung (300) zumindest zwei Bereitstelleinrichtungen (302, 304) aufweist, wobei über jede Bereitstelleinrichtung (302, 304) Strom, Gas und Schweißdraht aufnehmbar ist, wobei die über die Bereitstelleinrichtungen (302, 304) zugeführten Schweißdrähte (4, 5) über eine Schweißdrahtabführeinrichtung (306) aus der Trenneinrichtung (300) ausleitbar sind und wobei die über die Bereitstelleinrichtungen (302, 304) zugeführten Gase über einen oder mehrere Gasauslässe (320, 322) aus der Trenneinrichtung (300) ausleitbar sind.

8. Schweißvorrichtung nach Anspruch 7, **dadurch gekennzeichnet, dass** die Trenneinrichtung (300) mehrere Abführeinrichtungen (306, 320, 322) aufweist, wobei die Anzahl der Abführeinrichtungen (306, 320, 322) größer ist als die Anzahl der Bereitstelleinrichtungen (302, 304).

9. Schweißvorrichtung nach einem der vorangegangenen Ansprüche, **dadurch gekennzeichnet, dass** die Gasauslässe (320, 322) mit Gaseinkoppeleinrichtungen (108, 110) zum erneuten Einkoppeln der Gase in den Transportpfad des Schweißdrahtes (4, 5) verbunden sind.

10. Schweißvorrichtung nach Anspruch 9, **dadurch gekennzeichnet, dass** die Gaseinkoppeleinrichtungen (108, 110) Bestandteile der Ausrichteinrichtung (14), insbesondere des Aufnahmeanteils (16), oder der Zuführeinrichtung (100) oder der Zuordeneinrichtung (250) sind.

11. Schweißvorrichtung nach einem der vorangegangenen Ansprüche, **dadurch gekennzeichnet, dass** mehrere Quelleneinrichtungen (90, 92) vorgesehen sind, wobei jede Quelleneinrichtung (90, 92) eine Stromquelle, Arbeits-Gas-Quelle und Schweißdrahtquelle aufweist, wobei jede Quelleneinrichtung (90, 92) über eine Verbindungseinrichtung (91, 93) mit einer Bereitstelleinrichtung (302, 304) verbunden ist.

12. Mehrachsroboterarm (400), mindestens aufweisend eine Schweißvorrichtung (1) nach einem der vorangegangenen Ansprüche, wobei zumindest ein Anteil der Schweißvorrichtung (1), insbesondere die Zuführeinrichtung (100) und/oder ein Teil des Leitungselements (200), insbesondere die Zuordeneinrichtung (250), abschnittsweise in einer Hohlwelle des Mehrachsroboterarms (400) verläuft.

13. Verfahren zum Betrieb einer Schweißvorrichtung (1) nach einem der Ansprüche 1-11 oder zum Betrieb eines Mehrachsroboterarms (400) nach Anspruch 12 oder zum Betrieb eines Orbitalschweißroboters gemäß Anspruch 16, mindestens umfassend die Schritte: Zuführen eines ersten Schweißdrahts in Arbeitsrichtung und eines ersten Arbeitsgases von einer ersten Quelleneinrichtung (90) zu einer Stromkontaktdüse (2), Bewegen des ersten Schweißdrahts (4) entgegen der Arbeitsrichtung zum Freigeben eines Schweißdrahtpfades, insbesondere in einem Bereich zwischen der Zuführeinrichtung (100) und der Stromkontaktdüse (2), Zuführen eines zweiten Schweißdrahtes (5) in Arbeitsrichtung und eines zweiten Arbeitsgases von einer zweiten Quelleneinrichtung (92) zur Stromkontaktdüse (2) über denselben Schweißdrahtpfad, insbesondere in einem Bereich zwischen der Zuführeinrichtung (100) und der Stromkontaktdüse (2), wobei der erste Schweißdraht (4) und der zweite Schweißdraht (5) auf getrennten Schweißdrahtpfaden von den Quelleneinrichtungen (90, 92) zur Zuführeinrichtung (100) gefördert werden.

14. Verfahren nach Anspruch 13, **dadurch gekennzeichnet, dass** das jeweils zugeführte Arbeitsgas von der jeweiligen Quelleneinrichtung (90, 92) zusammen mit dem jeweiligen Schweißdraht (4, 5) über jeweils eine Verbindungseinrichtung (91, 93) zu einer Trenneinrichtung (300) geführt wird, wobei zumindest zeitlich überwiegend und bevorzugt stets nur von genau einer Quelleneinrichtung (90, 92) Arbeitsgas und Schweißdraht (4, 5) zur Trenneinrichtung (300) zugeführt wird, wobei die Trenneinrichtung (300) das Arbeitsgas in eine Gasabführeinrichtung (226, 228) leitet und den Schweißdraht auf einen von der Gasabführeinrichtung (226, 228) getrennten Schweißdrahtpfad weitet.

15. Verfahren nach Anspruch 14, **dadurch gekennzeichnet, dass** die Gasabführeinrichtung (226, 228) mit der Zuführeinrichtung (100) verbunden ist und das über die Gasabführeinrichtung (226, 228) geführte Arbeitsgas durch die Zuführeinrichtung (100) zum Umströmen des durch die Zuführeinrichtung (100) geförderten Schweißdrahts (4, 5) in den Transportpfad des Schweißdrahts (4, 5) eingekoppelt wird.

16. Orbitalschweißroboter (500) mindestens aufweisend eine Schweißvorrichtung (1) nach einem der vorangegangenen Ansprüche 1 bis 11, wobei zumindest ein Anteil der Schweißvorrichtung (1), insbesondere die Zuführeinrichtung (100) und/oder ein Teil des Leitungselements (200), insbesondere die Zuordeneinrichtung (250), abschnittsweise in einer Hohlwelle des Orbitalschweißroboter (500) verläuft oder der Düsenstock, insbesondere die Stromkontaktdüse, gegenüber einem Rahmen des Orbitalschweißroboters (500) schwenkbar ist.

## Claims

1. Welding apparatus (1), comprising at least a current contact nozzle (2), wherein the current contact nozzle (2) comprises an elongate guide device for guiding a welding wire (4), a nozzle holder (6), wherein the current contact nozzle (2) is arranged on or in the nozzle holder (6), a feed device (100) for transferring the welding wire (4) from a first orientation into a second orientation, wherein the welding wire (4) can be fed to the feed device (100) in the first orientation and can be conducted out of the feed device (100) in the second orientation, in particular can be conducted in the direction of the nozzle holder (6), wherein the feed device (100) comprises a preferably conical feeding surface (102), and an elongate line element (200), **characterized in that** the line element (200) can receive a plurality of welding wire cores (8, 10), wherein the welding wire cores (8, 10) can be introduced into the line element (200) via a first line element end and wherein the welding wire (4) guided in the welding wire cores (8, 10) can be guided out of the line element (200) via a second line element end,
wherein the welding wire (4) guided out of the line element (200) via the second line element end can be conducted in the direction of the feed device (100), in particular passes into the feed device (100) in the first orientation.

2. Welding apparatus according to Claim 1, **characterized in that** only one welding wire (4) can be arranged between the feed device (100) and the current contact nozzle (2).

3. Welding apparatus according to either of the preceding claims, **characterized in that** at least one stop (206) for limiting the penetration depth of the welding wire cores (8, 10) into the line element (200) is provided, wherein the stop (206) is part of an assignment device (250), wherein the assignment device (250) forms at least two axial openings (252, 254), wherein the end (9) of a welding wire core (8) can be arranged in front of an opening (252) in a defined manner, wherein the welding wire (4) guided through this welding wire core (8) can be conducted through the opening (252), and the end (11) of a further welding wire core (10) can be arranged in front of another opening (254) in a defined manner, wherein the further welding wire (5) conducted through the further welding wire core (10) can be conducted through the further opening (254), wherein the assignment device (250) forms an assignment component (256) which can be used to assign the welding wire core (8) to the opening (252) and the further welding wire core (10) to the other opening (254).

4. Welding apparatus according to one of the preceding claims, **characterized in that** an aligning device (14) is provided, wherein the nozzle holder (6) is connected, at least indirectly, to the aligning device (14), wherein a welding wire (4, 5) can be conducted through the aligning device (14) into the nozzle holder (6), in particular into the current contact nozzle (2), wherein the aligning device (14) comprises a receiving component (16) and a dispensing component (18), wherein current and/or working gas can be introduced into the aligning device (14) via the receiving component (16) and wherein the introduced current or the introduced working gas can be conducted to the nozzle holder (6) via the dispensing component (18).

5. Welding apparatus according to Claim 4, **characterized in that** the dispensing component (18) can be rotated in relation to the receiving component (16).

6. Welding apparatus according to one of the preceding claims, **characterized in that** the feed device (100) comprises at least one base part (104) and an interchangeable part (106), wherein the interchangeable part (106) comprises the conical feeding surface (102).

7. Welding apparatus according to one of the preceding claims, **characterized in that** a separating device (300) is provided, wherein the separating device (300) comprises at least two provision devices (302, 304), wherein current, gas and welding wire can be received via each provision device (302, 304), wherein the welding wires (4, 5) fed via the provision devices (302, 304) can be conducted out of the separating device (300) via a welding wire discharging device (306), and wherein the gases fed via the provision devices (302, 304) can be conducted out of the separating device (300) via one or more gas outlets (320, 322).

8. Welding apparatus according to Claim 7, **characterized in that** the separating device (300) comprises a plurality of discharging devices (306, 320, 322), wherein the number of discharging devices (306, 320, 322) is greater than the number of provision devices (302, 304).

9. Welding apparatus according to one of the preceding claims, **characterized in that** the gas outlets (320, 322) are connected to gas introduction devices (108, 110) for renewed introduction of the gases into the transport path of the welding wire (4, 5).

10. Welding apparatus according to Claim 9, **characterized in that** the gas introduction devices (108, 110) are constituent parts of the aligning device (14), in particular of the receiving component (16), or of the feed device (100) or of the assignment device (250).

11. Welding apparatus according to one of the preceding claims, **characterized in that** a plurality of source devices (90, 92) are provided, wherein each source device (90, 92) comprises a current source, working gas source and welding wire source, wherein each source device (90, 92) is connected to a provision device (302, 304) via a connecting device (91, 93).

12. Multi-axis robot arm (400) comprising at least a welding apparatus (1) according to one of the preceding claims, wherein at least one component of the welding apparatus (1), in particular the feed device (100), and/or a part of the line element (200), in particular the assignment device (250), run/runs at least in certain portions in a hollow shaft of the multi-axis robot arm (400).

13. Method for operating a welding apparatus (1) according to one of Claims 1-11 or for operating a multi-axis robot arm (400) according to Claim 12 or for operating an orbital welding robot according to Claim 16, comprising at least the following steps: feeding, in a working direction, a first welding wire and a first working gas from a first source device (90) to a current contact nozzle (2), moving the first welding wire (4) counter to the working direction in order to free up a welding wire path, in particular in a region between the feed device (100) and the current contact nozzle (2), feeding, in the working direction, a second welding wire (5) and a second working gas from a second source device (92) to the current contact nozzle (2) via the same welding wire path, in particular in a region between the feed device (100) and the current contact nozzle (2), wherein the first welding wire (4) and the second welding wire (5) are conveyed on separate welding wire paths from the source devices (90, 92) to the feed device (100).

14. Method according to Claim 13, **characterized in that** the respectively fed working gas is guided, together with the respective welding wire (4, 5), from the respective source device (90, 92) to a separating device (300) via a respective connecting device (91, 93), wherein working gas and welding wire (4, 5) is fed to the separating device (300) only from one source device (90, 92) at least for the majority of the time, and preferably at all times, wherein the separating device (300) conducts the working gas into a gas discharging device (226, 228) and conducts the welding wire onto a welding wire path that is separate from the gas discharging device (226, 228).

15. Method according to Claim 14, **characterized in that** the gas discharging device (226, 228) is connected to the feed device (100), and the working gas guided by the gas discharging device (226, 228) is introduced through the feed device (100) into the transport path of the welding wire (4, 5) in order to flow around the welding wire (4, 5) conveyed by the feed device (100).

16. Orbital welding robot (500) comprising at least a welding apparatus (1) according to one of the preceding Claims 1 to 11, wherein at least one component of the welding apparatus (1), in particular the feed device (100), and/or a part of the line element (200), in particular the assignment device (250), run/runs at least in certain portions in a hollow shaft of the orbital welding robot (500), or the nozzle holder, in particular the current contact nozzle, can be pivoted in relation to a frame of the orbital welding robot (500).

## Revendications

1. Dispositif de soudage (1), comprenant au moins une buse de contact de courant (2), la buse de contact de courant (2) présentant un appareil de guidage allongé pour guider un fil de soudage (4), un porte-buse (6), la buse de contact de courant (2) étant agencée sur ou dans le porte-buse (6), un appareil d'amenée (100) pour transférer le fil de soudage (4) d'une première orientation dans une deuxième orientation, le fil de soudage (4) pouvant être amené dans la première orientation à l'appareil d'amenée (100) et pouvant être extrait de l'appareil d'amenée (100) dans la deuxième orientation, notamment pouvant être conduit en direction du porte-buse (6), l'appareil d'amenée (100) présentant une surface d'amenée (102) de préférence de forme conique, et un élément de conduite allongé (200), **caractérisé en ce que** plusieurs âmes de fil de soudage (8, 10) peuvent être reçues par l'élément de conduite (200), les âmes de fil de soudage (8, 10) pouvant être introduites dans l'élément de conduite (200) par l'intermédiaire d'une première extrémité d'élément de conduite (202) et le fil de soudage (4) guidé dans les âmes de fil de soudage (8, 10) pouvant être sorti de l'élément de conduite (200) par l'intermédiaire d'une deuxième extrémité d'élément de conduite,
le fil de soudage (4) sorti de l'élément de conduite (200) par l'intermédiaire de la deuxième extrémité d'élément de conduite pouvant être conduit en direction de l'appareil d'amenée (100), notamment en pénétrant dans l'appareil d'amenée (100) dans la première orientation.

2. Dispositif de soudage selon la revendication 1, **caractérisé en ce qu'**uniquement un fil de soudage (4) peut être agencé entre l'appareil d'amenée (100) et la buse de contact de courant (2).

3. Dispositif de soudage selon l'une quelconque des revendications précédentes, **caractérisé en ce qu'**au moins une butée (206) est prévue pour limiter la profondeur de pénétration des âmes de fil de soudage (8, 10) dans l'élément de conduite (200), la butée (206) faisant partie d'un appareil d'attribution (250), l'appareil d'attribution (250) formant au moins deux ouvertures axiales (252, 254), l'extrémité (9) d'une âme de fil de soudage (8) pouvant être agencée de manière définie devant une ouverture (252), le fil de soudage (4) guidé par cette âme de fil de soudage (8) pouvant être conduit à travers l'ouverture (252) et l'extrémité (11) d'une autre âme de fil de soudage (10) pouvant être agencée de manière définie devant une autre ouverture (254), l'autre fil de soudage (5) conduit par l'autre âme de fil de soudage (10) pouvant être conduit à travers l'autre ouverture (254), l'appareil d'attribution (250) formant une partie d'attribution (256) par laquelle l'attribution de l'âme de fil de soudage (8) à l'ouverture (252) et de l'autre âme de fil de soudage (10) à l'autre ouverture (254) peut être effectuée.

4. Dispositif de soudage selon l'une quelconque des revendications précédentes, **caractérisé en ce qu'**un appareil d'alignement (14) est prévu, le porte-buse (6) étant relié au moins indirectement à l'appareil d'alignement (14), un fil de soudage (4, 5) pouvant être conduit par l'appareil d'alignement (14) dans le porte-buse (6), notamment la buse de contact de courant (2), l'appareil d'alignement (14) présentant une partie de réception (16) et une partie de distribution (18), du courant et/ou du gaz de travail pouvant être introduit(s) dans l'appareil d'alignement (14) par l'intermédiaire de la partie de réception (16) et le courant introduit ou le gaz de travail introduit pouvant être conduit vers le porte-buse (6) par l'intermédiaire de la partie de distribution (18).

5. Dispositif de soudage selon la revendication 4, **caractérisé en ce que** la partie de distribution (18) peut tourner par rapport à la partie de réception (16).

6. Dispositif de soudage selon l'une quelconque des revendications précédentes, **caractérisé en ce que** l'appareil d'amenée (100) présente au moins une partie de base (104) et une partie interchangeable (106), la partie interchangeable (106) présentant la surface d'amenée de forme conique (102).

7. Dispositif de soudage selon l'une quelconque des revendications précédentes, **caractérisé en ce qu'**un appareil de séparation (300) est prévu, l'appareil de séparation (300) présentant au moins deux appareils d'approvisionnement (302, 304), le courant, le gaz et le fil de soudage pouvant être reçus par l'intermédiaire de chaque appareil d'approvisionnement (302, 304), les fils de soudage (4, 5) amenés par l'intermédiaire des appareils d'approvisionnement (302, 304) pouvant être extraits de l'appareil de séparation (300) par l'intermédiaire d'un appareil d'évacuation de fils de soudage (306) et les gaz amenés par les appareils d'approvisionnement (302, 304) pouvant être extraits de l'appareil de séparation (300) par l'intermédiaire d'une ou de plusieurs sorties de gaz (320, 322).

8. Dispositif de soudage selon la revendication 7, **caractérisé en ce que** l'appareil de séparation (300) présente plusieurs appareils d'évacuation (306, 320, 322), le nombre d'appareils d'évacuation (306, 320, 322) étant supérieur au nombre d'appareils d'approvisionnement (302, 304).

9. Dispositif de soudage selon l'une quelconque des revendications précédentes, **caractérisé en ce que** les sorties de gaz (320, 322) sont reliées à des appareils d'injection de gaz (108, 110) pour réinjecter les gaz dans le trajet de transport du fil de soudage (4, 5).

10. Dispositif de soudage selon la revendication 9, **caractérisé en ce que** les appareils d'injection de gaz (108, 110) sont des composants de l'appareil d'alignement (14), notamment de la partie de réception (16), ou de l'appareil d'amenée (100) ou de l'appareil d'attribution (250).

11. Dispositif de soudage selon l'une quelconque des revendications précédentes, **caractérisé en ce que** plusieurs appareils sources (90, 92) sont prévus, chaque appareil source (90, 92) présentant une source de courant, une source de gaz de travail et une source de fil de soudage, chaque appareil source (90, 92) étant relié à un appareil d'approvisionnement (302, 304) par l'intermédiaire d'un appareil de liaison (91, 93).

12. Bras de robot à plusieurs axes (400), présentant au moins un dispositif de soudage (1) selon l'une quelconque des revendications précédentes, dans lequel au moins une partie du dispositif de soudage (1), notamment l'appareil d'amenée (100) et/ou une partie de l'élément de conduite (200), notamment l'appareil d'attribution (250), s'étend par sections dans un arbre creux du bras de robot à plusieurs axes (400).

13. Procédé d'exploitation d'un dispositif de soudage (1) selon l'une quelconque des revendications 1 à 11 ou d'exploitation d'un bras de robot à plusieurs axes (400) selon la revendication 12 ou d'exploitation d'un robot de soudage orbital selon la revendication 16, comprenant au moins les étapes suivantes : l'amenée d'un premier fil de soudage dans la direction de travail et d'un premier gaz de travail à partir d'un premier appareil source (90) vers une buse de contact de courant (2), le déplacement du premier fil de soudage (4) à l'encontre de la direction de travail pour libérer un trajet de fil de soudage, notamment dans une zone entre l'appareil d'amenée (100) et la buse de contact de courant (2), l'amenée d'un deuxième fil de soudage (5) dans la direction de travail et d'un deuxième gaz de travail à partir d'un deuxième appareil source (92) vers la buse de contact de courant (2) par l'intermédiaire du même trajet de fil de soudage, notamment dans une zone entre l'appareil d'amenée (100) et la buse de contact de courant (2), le premier fil de soudage (4) et le deuxième fil de soudage (5) étant acheminés sur des trajets de fil de soudage séparés à partir des appareils sources (90, 92) vers l'appareil d'amenée (100).

14. Procédé selon la revendication 13, **caractérisé en ce que** le gaz de travail respectivement amené est guidé à partir de l'appareil source respectif (90, 92) conjointement avec le fil de soudage respectif (4, 5) par l'intermédiaire d'un appareil de liaison respectif (91, 93) vers un appareil de séparation (300), le gaz de travail et le fil de soudage (4, 5) étant amenés à l'appareil de séparation (300) au moins temporairement de manière prépondérante et de préférence toujours seulement à partir d'exactement un appareil source (90, 92), l'appareil de séparation (300) conduisant le gaz de travail dans un appareil d'évacuation de gaz (226, 228) et conduisant le fil de soudage sur un trajet de fil de soudage séparé de l'appareil d'évacuation de gaz (226, 228).

15. Procédé selon la revendication 14, **caractérisé en ce que** l'appareil d'évacuation de gaz (226, 228) est relié à l'appareil d'amenée (100) et le gaz de travail guidé par l'intermédiaire de l'appareil d'évacuation de gaz (226, 228) est injecté par l'appareil d'amenée (100) dans le trajet de transport du fil de soudage (4, 5) pour contourner le fil de soudage (4, 5) acheminé par l'appareil d'amenée (100).

16. Robot de soudage orbital (500) présentant au moins un dispositif de soudage (1) selon l'une quelconque des revendications 1 à 11 précédentes, dans lequel au moins une partie du dispositif de soudage (1), notamment l'appareil d'amenée (100) et/ou une partie de l'élément de conduite (200), notamment l'appareil d'attribution (250), s'étend par sections dans un arbre creux du robot de soudage orbital (500) ou le porte-buse, notamment la buse de contact électrique, peut pivoter par rapport à un cadre du robot de soudage orbital (500).
